# EUROPÄISCHE PATENTSCHRIFT

(11) **EP 2 831 464 B1**
(45) Veröffentlichungstag und Bekanntmachung des Hinweises auf die Patenterteilung: **14.03.2018**
(21) Anmeldenummer: 13714235.2
(22) Anmeldetag: 22.03.2013
(51) Int. Cl.: F16D 65/56, F16D 55/226

(54) **ZUSPANNVORRICHTUNG FÜR EINE DREHHEBELBETÄTIGTE SCHEIBENBREMSE**
BRAKE APPLICATION DEVICE FOR A DISK BRAKE ACTUATED BY A ROTARY LEVER
DISPOSITIF D'APPLICATION D'EFFORT POUR UN FREIN À DISQUE ACTIONNÉ PAR UN LEVIER ROTATIF

(30) Priorität: 26.03.2012 DE 102012006097
(43) Veröffentlichungstag der Anmeldung: 04.02.2015
(73) Patentinhaber: KNORR-BREMSE Systeme für Nutzfahrzeuge GmbH, 80809 München (DE)
(72) Erfinder: ASEN, Alexander, 94428 Eichendorf (DE); FRICKE, Jens, 94474 Vilshofen (DE); IRASCHKO, Johann, 85301 Schweitenkirchen (DE); PESCHEL, Michael, 82296 Schöngeising (DE); STOEGER, Christian, 94474 Vilshofen (DE)
(86) Internationale Anmeldenummer: PCT/EP2013/056027
(87) Internationale Veröffentlichungsnummer: WO 2013/143994

(56) Entgegenhaltungen:
- GB-A- 2 442 552
- US-A- 5 520 267
- US-A1- 2011 017 553

## Beschreibung

Die Erfindung betrifft eine Zuspannvorrichtung für eine drehhebelbetätigte Scheibenbremse, insbesondere für eine mittels einer Kolbenstange eines pneumatisch oder elektromotorisch betriebenen Bremszylinders betätigbare Scheibenbremse.

Pneumatisch betätigte Scheibenbremse weisen in der Regel einen als Schiebesattel, Schwenksattel oder Festsattel ausgebildeten Bremssattel auf, in welchem eine Zuspannvorrichtung angeordnet ist, welche dazu dient, Bremsbeläge beidseits einer Bremsscheibe und die Bremsscheibe miteinander in Wirkverbindung zu bringen, um durch Reibung eine Bremswirkung zu erzielen.

Pneumatisch betätigte Scheibenbremsen gehören mittlerweile zur Standartausrüstung bei schweren Nutzfahrzeugen. Derartige Scheibenbremsen benötigen zur Erzeugung der geforderten Zuspannkraft eine mechanische Übersetzung, da die Kraft der pneumatisch beaufschlagten Bremszylinder wegen des Druckniveaus (derzeit ca. 10 bar) und der limitierten Baugröße der Bremszylinder beschränkt ist. Bei den derzeit bekannten pneumatisch betätigten Scheibenbremsen finden sich Übersetzungsverhältnisse zwischen 10:1 und 20:1.

Hauptanforderungen an den Übersetzungsmechanismus sind:
- Eine kompakte Bauweise;
- Die Einhaltung des vorgegebenen Bauraums;
- Eine hohe Festigkeit;
- Eine hohe Steifigkeit;
- Ein hoher mechanischer Wirkungsgrad bzw. geringe mechanische Hysterese;
- Die Einhaltung der vorgegebenen Kraftwirkungsrichtungen für die Betätigungsseite und die Zuspannseite;
- Eine gleichmäßige Verteilung der Zuspannkraft auf den Bremsbelag.

Weitere Anforderungen an den Übersetzungsmechanismus sind:
- Hohe Flexibilität hinsichtlich mechanischer Übersetzung;
- Ausübung einer Richtwirkung auf den Bremsbelag zur Vermeidung von Schrägverschleiß;
- Einfache und kostengünstige Herstellung der mechanischen Komponenten;
- Einfache mechanische Bearbeitung des Sattels und der Komponenten; und
- Einfache Montage.

Zur Erfüllung der vorher genannten Hauptanforderungen hat sich das Prinzip der einfachen Hebelübersetzung als interessante Variante erwiesen. Derartige Zuspannmechanismen bzw. - Vorrichtungen haben sich in unterschiedlichsten Ausführungen mittlerweile auf dem Markt etabliert.

Die Kraftübersetzung wird hierbei über einen Hebel mit zwei verschiedenen Hebelarmlängen dargestellt. Dabei wirkt die Bremszylinderkraft am langen Hebelarm und erzeugt so über das Hebelverhältnis am kurzen Hebelarm, eine hohe Kraft, welche zum Anpressen der Bremsbeläge an die Bremsscheibe benötigt wird. Zur besseren Verteilung erfolgt die Einleitung der Zuspannkraft in den Bremsbelag häufig über zwei sogenannte Druckstücke, die wiederum über Gewindetriebe mit der Übersetzungsmechanik gekoppelt sind. Es gibt aber auch Systeme, die mit nur einem Druckstück und einem Gewindetrieb ausgeführt sind.

Ein typischer Vertreten dieser o. geschilderten Bremsengeneration ist die in der WO 91/19115 dargestellte Scheibenbremse. Die Zuspannvorrichtung dieser Scheibenbremse weist einen Drehhebel auf, der an seinem unteren Ende wenigstens einen Exzenteransatz aufweist, der über ein erstes Schwenklager drehbar in Inneren des Bremssattels gelagert ist und der über eine Stützwalze an einer Traverse abgestützt ist, in welche Gewindespindeln eingeschraubt sind, die über Druckstücke auf den aktionsseitigen Bremsbelag einwirken können, um diesen bei Bremsungen in Richtung der Bremsscheibe zu verschieben. Diese bekannte pneumatisch betätigte Scheibenbremse weist zudem eine automatische Nachstellvorrichtung auf, um den Belag- und Scheibenverschleiß auszugleichen.

Neben der hohen Kraftübersetzung muss der Mechanismus über eine geringe Reibung verfügen, damit ein guter Wirkungsgrad und eine geringe Hysterese erreicht werden.

Die US RE38,874E offenbart eine Schiebesattel-Scheibenbremse, bei welcher die Anordnung von Drehhebel und Stützwalze im Vergleich zum eingangs genannten Stand der Technik "umgedreht" worden ist, d.h., die Stützwalze oder eine stützwalzenartige Kontur ist drehfest an der Innenseite des Bremssattels angeordnet oder ausgebildet und auf der Stützwalze ist der untere Exzenteransatz des Drehhebels drehbar gelagert, welcher an seiner von der Stützwalze abgewandten Seite über ein Schwenklager auf eine Traverse einwirkt, in welche die beiden über das Synchronisationsgetriebe - hier eine Kegelradanordnung - gekoppelten Stellspindeln mit den Druckstücken eingeschraubt sind.

Aus der EP 0 248 385 A1 ist es ferner eine Gleitsattelscheibenbremse bekannt, zum Zuspannen der Bremse mit einem außerhalb eines Bremssattels liegenden Drehhebel, dessen Drehachse parallel zur Bremsscheibenachse liegt, eine den Bremssattel durchsetzende Antriebsscheibe einer Kugelrampenanordnung zu drehen, welche im Inneren des Bremssattels verbunden ist und auf ein Druckstück einwirkt, dass an der Rückseite eines Bremsbelages angreift. Diese Scheibenbremse weist u.a das Problem auf, dass der Bremssattel von einer drehenden Welle durchsetzt ist.

Zum Ausgleich von Belag- und Scheibenverschleiß weisen die bekannten Scheibenbremsen, so die aus der WO 91/19115 bekannte Scheibenbremse, eine Nachstellvorrichtung auf. So ist es aus diesem Stand der Technik bekannt, den Drehhebel der Zuspannvorrichtung über einen Antriebsstift mit einem Getriebeelement der Nachstellvorrichtung zu koppeln, so dass bei einem Zuspannen der Bremse, bei welchem der Drehhebel verschwenkt wird, auch das Getriebeelement der Nachstellvorrichtung bewegt, insbesondere gedreht wird. Diese Drehung wird über weitere Getriebeelemente der Nachstellvorrichtung auf ein Abtriebsgetriebeelement übertragen, welches drehfest mit der Mutter oder der Spindel der Mutter-/Spindelanordnung gekoppelt ist.

In der WO 91/19115 sind zwei drehfest gekoppelte Gewindetriebe - ausgebildet als Mutter-Spindelanordnungen - vorgesehen, die über ein Synchronisationsgetriebe - ein Umschlingungsgetriebe wie eine Kette oder einen Zahnriemen - drehfest gekoppelt sind, wobei nur in einer dieser Anordnungen eine Nachstellvorrichtung bzw. ein Nachstellantrieb angeordnet ist. Das Umschlingungsgetriebe umgreift den Koppelbereich zwischen dem Exzenteransatz des Drehhebels und der Traverse.

Mit der vorstehend beschriebenen Anordnung wird die Einstellung des sogenannten Lüftspiels vorgenommen. Dieser Vorgang sei nachfolgend nochmals näher betrachtet.

Unter dem Lüftspiel wird im Rahmen dieser Schrift der Spalt zwischen den Bremsbelägen und der Bremsscheibe im unbetätigten Zustand verstanden. Die Einstellung des Lüftspiels erfolgt dabei nach dem vorstehend beschriebenen Stand der Technik selbsttätig mit Hilfe des automatischen Verschleißnachstellers, der beispielhaft konzentrisch im Hohlraum eines Gewindetriebes angeordnet ist und exzentrisch über das Antriebselement (den Stift bzw. Schaltfinger) vom Bremshebel angetrieben wird.

Beim Bremsen führt der mit der Kolbenstange des Bremszylinders gekoppelte Bremshebel eine Drehbewegung aus. Bevor über den Koppelmechanismus der Nachstellung (Schaltgabel und Schaltfinger) die Drehbewegung des Hebels in den Nachsteller eingeleitet wird, muss ein sogenannter Ansprechweg überwunden werden. Dieser Weg ist für die Größe des Lüftspiels ausschlaggebend, da während dieser Bewegung die Nachstellung nicht aktiviert wird, und der Zuspannweg damit das Lüftspiel darstellt.

Nach Überwindung dieses Ansprechwegs wird der Nachsteller in eine Drehbewegung versetzt und durch die Koppelung mit dem Gewinderohr ein Nachstellvorgang eingeleitet.

Die nominelle Größe des Lüftspiels wird durch den vorher beschriebenen Funktionsablauf eindeutig definiert. In der Praxis wird die Größe des Lüftspiels jedoch auch durch dynamische Effekte beeinflusst. Bei Rüttelbeanspruchung kann es z.B. vorkommen, dass sich das Lüftspiel durch Bewegungen in der Verstellmechanik verkleinert. Eine Reduzierung des Lüftspiels kann zu einer Beeinträchtigung des Betriebsverhaltens der Bremse führen, die sich z.B. in einem erhöhten Restschleifmoment äußert.

Die max. ertragbare Rüttelbelastung im Hinblick auf die Nachstellung hängt dabei sehr stark von den Hemmwirkungen bzw. Reibungen in der Nachstellmechanik ab. Für die Rüttelsicherheit wären möglichst hohe Haltekräfte für die Nachstellmechanik vorteilhaft. Diese Anforderung steht jedoch im Widerspruch zu den vom Nachsteller bereitgestellten Verstellkräften. Da der Nachsteller nicht beliebig groß gebaut und dimensioniert werden kann, sind die Verstellkräfte relativ stark limitiert. Für eine sichere Nachstellung ist es erforderlich, dass die Nachstellung über Reservekräfte verfügt, damit auch bei erschwerten Bedingungen (Kälte; Verschmutzung, Mangelschmierung) eine automatische Verschleißnachstellung gewährleistet ist.

Vor diesem Hintergrund ist das Folgende die Aufgabe der Erfindung. Durch eine mechanische Vorrichtung soll der vorher geschilderte Zielkonflikt vermieden werden. Vorzugsweise sollte der Mechanismus in der Lüftspielphase (beispielsweise etwa 0,8mm) eine relativ hohe Haltekraft und in der Zuspannphase (beispielsweise 0,8mm bis ca. 4,2mm) eine relative geringe Haltekraft bereitstellen. Somit wäre gewährleistet, dass im nicht betätigten Zustand und in der Lüftspielphase keine unbeabsichtigte Nachstellung durch Rütteleinwirkungen oder anderen Störfaktoren erfolgen würde. Andererseits gäbe es keine Beeinträchtigung für die Nachstellfunktion, da nach Überwindung der Lüftspielphase die Haltekräfte sehr stark reduziert wären.

Eine gattungsgemäße Scheibenbremse geht z.B. aus US-A-2011/0017553 hervor.

Die Erfindung löst diese Aufgabe durch den Gegenstand des Anspruchs 1. Vorteilhafte Ausgestaltungen der Erfindung sind in den Unteransprüchen angegeben Gemäß Anspruch 1 ist wenigstens eine oder es sind mehrere wegabhängige Kupplung(en), insbesondere Schaltkupplungen vorgesehen, die mit dem wenigstens einen Gewindetrieb oder einem sonstigen Drehelement des Nachstellsystems direkt oder indirekt gekoppelt ist/sind und die im gelösten Zustand der Bremse geschlossen ist/sind, so dass sie Relativverdrehungen zwischen dem oder den Elementen des Gewindetriebes verhindert und die im zugespannten Zustand der Bremse geöffnet ist und nach Überwinden eines Mindesthubes eine Nachstellbewegung des Gewindetriebes freigibt.

Vorzugsweise wird die Zuspannvorrichtung also um wenigstens eine wegabhängige Schaltkupplung ergänzt, welche derart direkt oder indirekt über eines oder mehrere zwischengeschaltete Element(e) mit wenigstens einem Element der Gewindetriebe so gekoppelt ist, dass Relativverdrehungen der Elemente der Gewindetriebe im geschlossenen Zustand verhindert werden.

Zusammenfassend wird derart eine vorteilhafte Zusatzkomponente für die Zuspannvorrichtungen mit der einen oder den mehreren Nachstellvorrichtungen geschaffen, welche das Nachstellverhalten im Betrieb deutlich verbessert.

Das Grundprinzip besteht darin, dass im nicht betätigten Zustand bzw. innerhalb der definierten Lüftspielphase die Kupplung - vorzugsweise durch eine Federkraft wenigstens einer Feder - geschlossen ist und damit eine hohe Haltkraft bereitstellt.

Nach einem Überwinden des definierten Lüftspiels wird die Kupplung vom Zuspannmechanismus der Bremse geöffnet. Die Haltekraft wird somit signifikant reduziert und im Falle eines zu großen Lüftspiels kann dadurch die Nachstellung ohne Beeinträchtigung eine Lüftspielanpassung vornehmen.

Ein weiterer positiver Einfluss ergibt sich für die Genauigkeit des Lüftspiels. Da die Nachstellung erst nach Überwindung des Lüftspielhubs möglich ist, wird der Toleranzeinfluss im Bereich des Nachstellerantriebs eliminiert bzw. stark gemindert. Wie o. beschrieben wird nach dem aktuellen Stand der Technik das Lüftspiel durch den Ansprechweg definiert. Dieser Ansprechweg wird durch die Toleranzen der Antriebskomponenten und der Lagetoleranz des Nachstellers mehr oder weniger stark beeinflusst. Bei der neuen Ausführung wird hingegen das Lüftspiel durch die individuelle Justierung (Berücksichtigung der vorhandenen Toleranzsituation der jeweiligen Bremse) des Ansprechwegs der Schaltkupplung eingestellt. Damit eine Nachstellung u. U. nicht schon vor Freischaltung der Kupplung erfolgt ist es erforderlich, dass die Kupplungskraft größer ist als die Nachstellkraft.

Vorzugsweise bildet die wenigstens eine Schaltkupplung mit weiteren Elementen ein Lüftspielsicherungsmodul, das vorzugsweise vormontiert einfach in die Bremse einbaubar ist.

Ferner besteht die Möglichkeit dazu, im Vergleich zum Stand der Technik die Nachstellgeschwindigkeit zu erhöhen.

Dies ist dann möglich, wenn die Lastschaltkupplung (bzw. Überlastkupplung) des Nachstellers als Federspeicherkupplung ausgeführt ist.

Wenn der Antrieb des Nachstellers ohne Ansprechweg, also unmittelbar mit der Betätigung der Bremse erfolgt, wird zunächst die Antriebsbewegung des Nachstellers in der federbelasteten Lastschaltkupplung des Nachstellers gespeichert. Wenn dann, nach Überwindung des Lüftspielhubs, die Schaltkupplung der Lüftspielsicherungsvorrichtung frei geschaltet wird, kann sich die gespeicherte Energie im Nachsteller freisetzen und somit die Nachstellgeschwindigkeit erhöhen. Die Freisetzung der gespeicherten Energie ist jedoch nur dann möglich, wenn das Lüftspiel ein vergrößertes Maß aufweist und somit Nachstellbedarf besteht. Andernfalls kann sich die Energie nicht freisetzen, da die Zuspannmechanik durch die Anpressung der Beläge an die Bremsscheibe mit hoher Kraft beaufschlagt ist und eine Verstellung somit nicht möglich ist. Die Vorspannung des Nachstellers wird nach Rückkehr der Mechanik in die Grundstellung wieder gelöst. Die richtige Einstellung des Lüftspiels ist somit gewährleistet.

Nach den weiteren Unteransprüchen werden zwei Ausführungsvarianten näher spezifiziert.

Nach den Varianten der Erfindung ergeben sich folgende Vorteile:
- eine hohe Rüttelsicherheit da im nicht betätigten Zustand eine hohe Haltekraft bereitgestellt werden kann. Dies resultiert in einer Steigerung der Betriebssicherheit.
- größere Kraftreserven des Nachstellmechanismus, da nach Überwindung der Lüftspielphase keine hohen Gegenkräfte überwunden werden müssen. Dies resultiert in einer Steigerung der Betriebssicherheit.
- eine Verringerung der Lüftspielstreuung, da die Steuerung des Lüftspiels über die wegabhängige Schaltkupplung erfolgt. Die Einstellung der Schaltkupplung geschieht unter Berücksichtigung der jeweiligen Toleranzsituation an der Bremse. Dies resultiert in einer Verbesserung des Betriebsverhaltens.
- eine Erhöhung der Nachstellgeschwindigkeit, da der Nachsteller ohne Ansprechweg betätigt wird. Die dabei gespeicherte Energie kann als zusätzlicher Nachstellweg genutzt werden. Dies resultiert in einer allgemeinen Funktionsverbesserung.

Nach weiteren vorteilhaften und bevorzugten Ausgestaltungen der Erfindung können ferner folgende Ausführungsvarianten realisiert werden.

Es können ein oder mehrere Lüftspielsicherungsmodule eingesetzt werden.

Die Lüftspielsicherungsmodule können direkt mit den Nachstellgewindeelementen gekoppelt sein.

Die Lüftspielsicherungsmodule können mittels einem oder mehrerer Zahnräder, Kegelräder; Zugmittelgetriebe; Kupplungen o. ä. mit den Nachstellkomponenten gekoppelt sein.

Die Spieleinstellung kann insbesondere und vorteilhaft in einfacher Weise mittels Justierschrauben, -muttern o. ä. erfolgen Die Spieleinstellung kann aber auch nach eine anderen sehr kompakt bauenden Variante auf einfache Weise mittels Justierscheiben erfolgen.

Die Kupplung kann als Reibungskupplung wie z.B. Konuskupplung, Lamellenkupplung ausgeführt werden.

Die Kupplung kann aber alternativ auch als formschlüssige Kupplung z.B. Zahnkupplung ausgeführt werden.

Kombinierbar ist die Erfindung insbesondere auch mit einem neuen Konzept für die Zuspannmechanik. Dieses Konzept basiert nicht mehr wie bisher auf einem einfachen Übersetzungshebel, sondern auf einer Wälzkörperzuspanneinheit, insbesondere einem Kugelrampenmechanismus, der von einem innerhalb er Bremssattels liegenden Drehhebel angetrieben wird.

Eine besonders bevorzugte Ausführungsform ist dabei die Ausgestaltung mit zwei vorzugsweise parallel zueiander ausgerichteten Wälzkörpereinheiten, insbesondere Kugelrampenmechanismen, welche durch den in diesem Fall vorteilhaft zentral bzw. mittig zwischen diesen positionierten Drehhebel angetrieben werden.

Der Antrieb vom Drehhebel zu den Wälzkörpereinheiten, insbesondere den Kugelrampeneinheiten bzw. -mechanismen, erfolgt durch eine Antriebsverbindung, die zwar in verschiedener Weise ausgestaltet werden kann, die aber besonders bevorzugt als Kegelradantrieb ausgebildet ist. Aufgrund des geringen Drehwinkels genügen zum Antrieb jeweils Kegelradsegmente an Ansätzen des Drehhebels und jeweils einer Antriebsscheibe der Wälzkörpereinheiten.

Diese Ausgestaltung hat besonders viele Vorteile. Da der Drehhebel nicht mehr primär zur Erzeugung der Zuspannkraft dient, sondern hauptsächlich als Antriebselement für die Kugelrampen verwendet wird, sind die Kräfte, welche auf den Hebel einwirken im Vergleich zum eingangs erläuterten Stand der Technik deutlich kleiner. Aufgrund dieser Gegebenheit kann die Hebellagerung im Vergleich erheblich geringer in der Dimensionierung ausgeführt werden. Damit ergeben sich für die Baugröße und der Belastung des Gehäuses bzw. Bremssattels im Bereich der Hebellagerung deutliche Vorteile.

Die an den Kugelrampenmechanismen sich ergebenden Reaktionsmomente werden nach einer vorteilhaften Variante der Erfindung besonders bevorzugt durch eine sogenannte Drehmomentstütze abgefangen, die in den Unteransprüchen spezifiziert ist. Hierbei ist zu erwähnen, dass durch die gegenseitige Abstützung der beiden Kugelrampenmechanismen über die Drehmomentstütze keine Reaktionskräfte auf das Sattelgehäuse einwirken. Reibkräfte und damit verbundene Verschleißerscheinungen sowie negative Einflüsse auf den Wirkungsgrad werden somit vermieden.

Die erfindungsgemäße Anordnung bietet noch weitere zahlreiche Vorteile.

Anstelle der besonders bevorzugten Ausführung mit zwei vorzugsweise hinsichtlich ihrer Drehachse zueinander parallel angeordneten Wälzkörpereinheiten zur Zuspannung können alternativ auch nur eine Wälzkörpereinheit, insbesondere nur ein Rampenmechanismus oder drei oder mehr Wälzkörpereinheiten, insbesondere Rampenmechanismen, vorgesehen sein. Auch diese Varianten realisieren jeweils vorteilhafte Bauformen.

Grundsätzlich ist die Erfindung nicht auf eine bestimmte Art von Zuspannvorrichtungen beschränkt sondern an verschiedensten Zuspannvorrichtungen realisierbar, so an solchen mit einem Exzenterhebel, sofern diese Zuspannvorrichtungen wenigstens einen Gewindestempel aufweisen, wobei der Gewindetriebe auch beispielsweise aus einer Gewindespindel und eine Traverse mit Innengewinde bestehen kann, an welcher direkt zwei Druckstücke ausgebildet sind.

Geschaffen wird auch die Weiterbildung und auch selbstständige Erfindung der Ansprüche 17 ff.

Nachfolgend wird die Erfindung anhand von Ausführungsbeispielen unter Bezug auf die Zeichnung näher beschrieben. Es zeigt:
- Fig. 1: einen Schnitt durch einen zuspannseitigen Abschnitt eines Bremssattels und einer Zuspannvorrichtung einer erfindungsgemäßen Scheibenbremse;
- Fig. 2: eine perspektivische Ansicht einer Wälzkörper-Zuspanneinheit mit einer Gewindespindel;
- Fig. 3: eine Seitenansicht der Wälzkörper-Zuspanneinheit aus Fig. 1 ohne Gewindespindel;
- Fig. 4a,b: eine perspektivische Ansicht und einen Schnitt durch die Zuspannvorrichtung aus Fig. 1;
- Fig. 5: eine perspektivische Ansicht eines Drehhebels;
- Fig. 6: eine perspektivische Ansicht eines zuspannseitigen Abschnittes eines Bremssattels;
- Fig. 7a, b: zwei perspektivische Ansichten einer um zwei Lüftspielsicherungsvorrichtungen ergänzten Zuspannvorrichtung nach Art der Fig. 1, die in Fig. 7b ohne Druckstücke, Widerlager/Verschlußplatte und Drehmomentstütze dargestellt ist;
- Fig. 8a: einen Schnitt durch einen Abschnitt eines Bremssattels mit einem Abschnitt einer Zuspannvorrichtung nach Art der Fig. 7a in einer ersten Betriebstellung zwischen Bremsungen;
- Fig. 8b: eine Ausschnittsvergrößerung eines Teils der Anordnung aus Fig. 8a;
- Fig. 9a: einen Schnitt analog zur Fig. 8a in einer zweiten Betriebstellung bei einer Bremsung;
- Fig. 9b: eine Ausschnittsvergrößerung eines Teils der Anordnung aus Fig. 9a;
- Fig. 10: eine perspektivische Ansicht eines Bremssattels mit zwei Bremsbelägen ohne Bremsscheibe, deren Rand zwischen den beiden Bremsbelägen angeordnet werden kann;
- Fig. 11: eine perspektivische Ansicht einer zweiten Zuspannvorrichtung;
- Fig. 12: eine weitere perspektivische Ansicht eines teilweise ausgeblendeten Bremssattel mit einer Zuspannvorrichtung nach Art der Fig. 11;
- Fig. 13: einen Schnitt durch einen Abschnitt eines Bremssattels mit einer Zuspannvorrichtung nach Art der Fig. 11;
- Fig. 14a, b: eine Ausschnittsvergrößerung einer Lüftspielsicherungsvorrichtung in zwei verschiedenen Betriebszuständen im ungebremsten Zustand bzw. zwischen Bremsungen und während einer Bremsung; und
- Fig. 15: eine Draufsicht auf einen Teil einer Scheibenbremse.

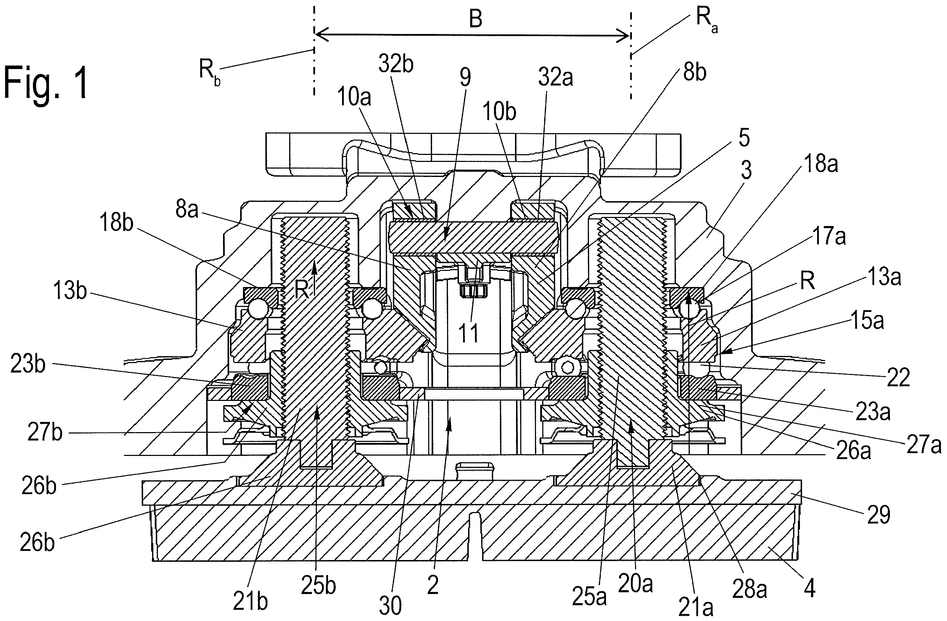

Fig. 1 zeigt einen Schnitt durch einen Abschnitt einer eine Zuspannvorrichtung 1 aufnehmenden Öffnung 2 eines hier nur teilweise dargestellten Bremssattels 3 einer von einem (hier nicht dargestellten) Aktuatorelement betätigbaren Scheibenbremse. Bei dem Aktuatorelement handelt es sich vorzugsweise um eine Kolbenstange eines pneumatisch oder elektromotorisch oder federbetätigten Bremszylinders (hier nicht dargestellt).

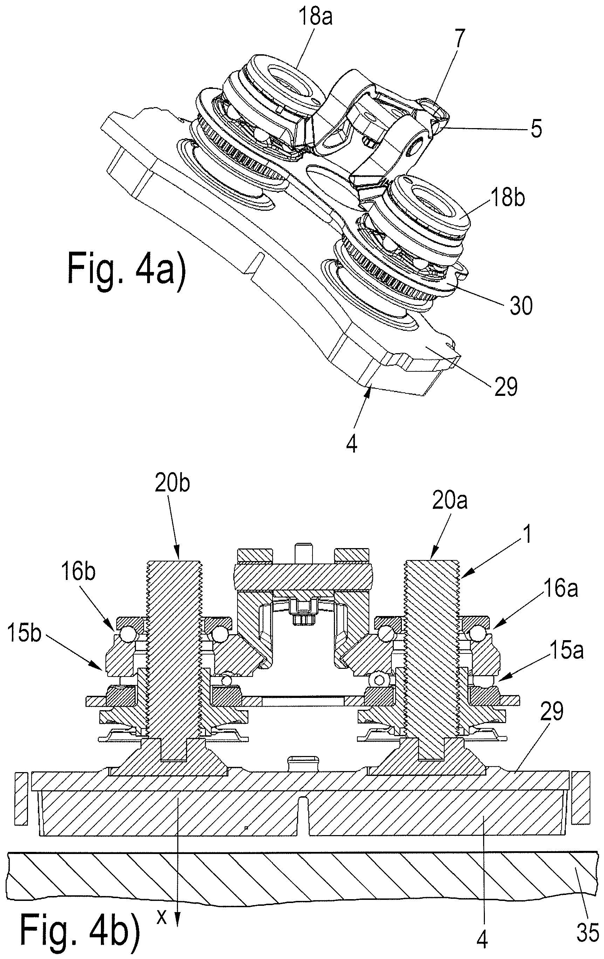

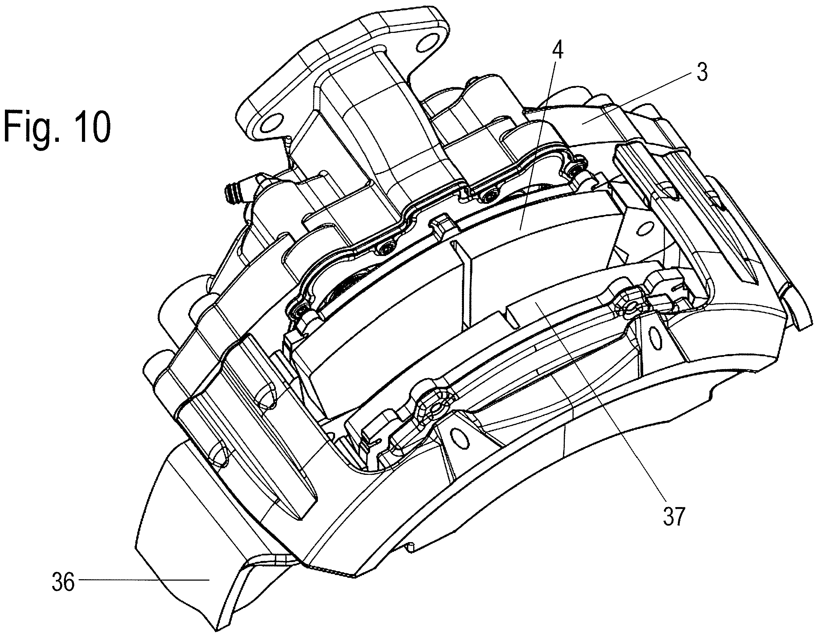

Der ein- oder mehrteilige Bremssattel 3 ist vorzugsweise als ein Schiebesattel ausgebildet (siehe auch Fig. 10), der an einem Bremsträger 36 - beispielsweise an hier nicht dargestellten Lagern an einem oder in der Regel zwei Lagerbolzen - verschiebbar geführt ist. Der Bremssattel 3 umgreift - beispielsweise nach Art des Standes der Technik der EP 0 248 385 A1 - rahmenartig einen Randabschnitt einer hier in Fig. 4b nur angedeutet dargestellten Bremsscheibe 35. Beidseits der Bremsscheibe 35 sind Bremsbeläge 4, 37 angeordnet, von welchen in Fig. 1 der eine zuspannseitige Bremsbelag 4 dargestellt ist und von denen in Fig. 10 beide zu erlkennen sind.

Bei Bremsungen wird mit der Zuspannvorrichtung 1 der zuspannseitige Bremsbelag 4 parallel zur Drehachse der Bremsscheibe 35 in Richtung X direkt gegen die Bremsscheibe 35 gepresst, wohingegen der reaktionsseitige Bremsbelag 37 (Fig. 10) mit dem verschieblichen Bremssattel 3 in Richtung -X gegen die Bremsscheibe 35 gezogen wird.

Für eine solche Schiebebesattel-Scheibenbremse ist die dargestellte Zuspannvorrichtung insbesondere geeignet.

Die Zuspannvorrichtung weist als Antriebselement einen Drehhebel 5 auf, der dazu ausgelegt ist, von einer Kolbenstange eines hier nicht dargestellten Bremszylinders bewegt zu werden. Der Drehhebel weist einen länglichen Hebelarm 6 auf.

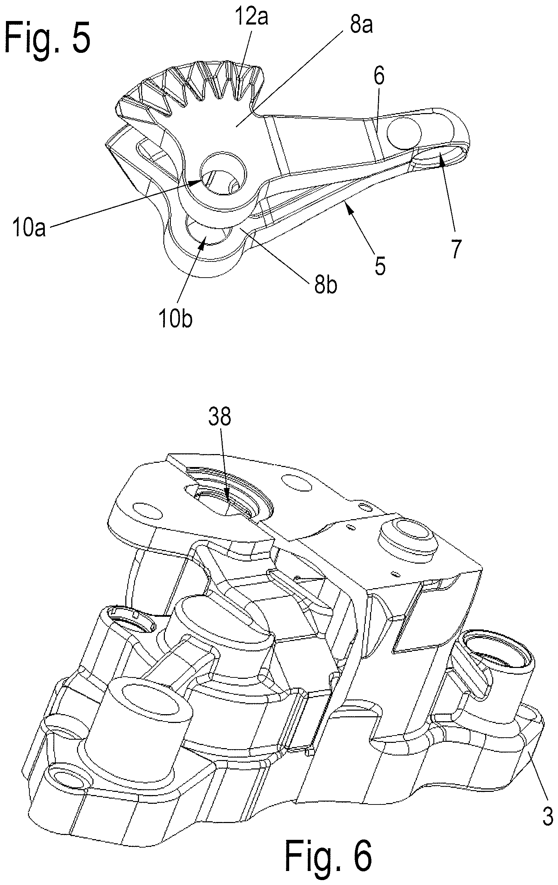

Dieser Hebelarm 6 ist an seinem einen Enden derart ausgestaltet, dass an ihm die Kolbenstange ansetzen kann, um den Drehhebel zu 5 verschwenken. Beispielsweise weist der Drehhebel an diesem Ende eine Vertiefung 7 auf, in welchen die Kolbenstange des Bremszylinders durch eine Öffnung 38 im Bremssattel 3 eingreifen kann. Ausgehend von der Vertiefung 7 spreizt sich der Hebelarm 6 gabelartig auf und endet an den beiden Enden dieser Gabel in zwei parallel zueinander sowie beabstandet zueinander angeordneten Antriebsradsegmenten 8a, 8b (siehe Fig. 5).

Dabei sind die beiden Antriebsradsegmente 8a, 8b drehbar - beispielsweise mittels je eines Gleitlagers 32a, b - auf einem Hebellagerbolzen 9 gelagert, der Bohrungen 10a, b der Antriebsradsegmente 8a, 8b durchsetzt, sich zwischen den beiden Antriebssegmenten 8a, 8b erstreckt und der in einem Bereich zwischen den Antriebssegmenten 8a, 8b an der Innenwand des Bremssattels abgestützt ist. Er kann mit einem Befestigungselement wie einer Art Schelle(nteil) 11 und einer oder mehreren Schrauben an der von der Bremsscheibe 35 abgewandten Innenwand der Bremssattels 3 festgelegt sein.

Dabei ist an den beiden auf dem Lagerbolzen 9 drehbar bzw. schwenkbar angeordneten Antriebssegmenten 8a, 8b jeweils eine Antriebsverzahnung ausgebildet.

Diese Antriebsverzahnung ist hier wiederum in besonders vorteilhafter Ausgestaltung als Kegelradverzahnung(ssegment) 12 an den voneinander abgewandten Außenseiten der Antriebssegmente 8a, 8b ausgebildet, deren Drehachse in der Mitte des Lagerbolzens 9 liegt. Auf einen Antriebsexzenter wird bei diesem Drehhebel damit vorteilhaft verzichtet. Der Drehhebel 5 ist nur ein Antriebselement, erzeugt aber nicht direkt eine Bewegung in Richtung X parallel zur Bremsscheibe, um den Arbeitshub (an den noch zu erläuternden) Druckstücken zu erzeugen. Der Drehhebel 5 kann damit kompakt und kostengünstig ausgelegt werden. Auch kann an ihm auf eine Wälzlagerung - bevorzugt aber nicht zwingend - verzichtet werden.

Der Drehhebel 5 ist dazu ausgelegt, über die wenigstens eine oder hier zwei Antriebsverzahnung(en) eine (jeweils um eine Rotationsachse Ra, Rb parallel zur Bremsscheibe 35) drehbare Antriebsscheibe 13a, b von einer oder mehreren Wälzkörper-Zuspanneinheiten 15 anzutreiben. Hier sind zwei dieser Antriebsscheiben 13a, b vorgesehen, deren Rotationsachsen Ra und Rb parallel zueinander liegen.

Dabei weist die/jede Antriebsscheibe 13a, b eine Antriebsverzahnung auf, welche mit der jeweils korrespondierenden Antriebsverzahnung der Antriebsegmente 8a, 8b kämmt.

Vorzugsweise ist diese Antriebsverzahnung jeweils an den Antriebsscheiben 13a, b als ein Kegelradverzahnung(segment) 14a, b ausgebildet, welche mit den KegelradVerzahnung(en) 12a, b am Drehhebel 5 kämmt.

Die Kegelradverzahnungen 12a, b; 14a, b liegen in Fig. 1 rechtwinklig zueiander.

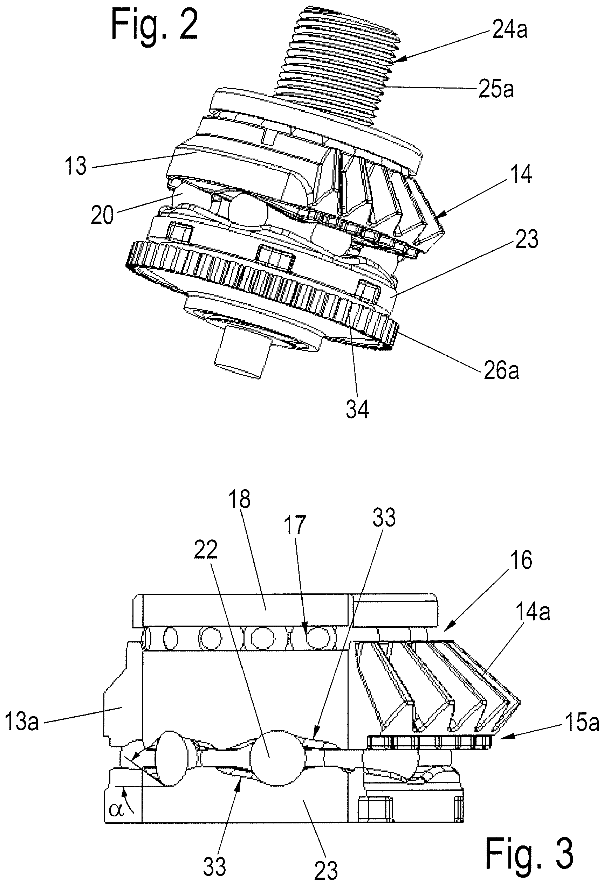

Eine bevorzugte Wälzkörperzuspanneinheit 15 ist in Fig. 2 und 3 zu erkennen bzw. in Fig. 3 dargestellt.

Die Wälzkörperantriebseinheiten 15a, b sind parallel zueinander angeordnet. Vorzugsweise sind zwei der Wälzkörperzuspanneinheiten 15a, b vorgesehen, die nebst zwei Zuspannkolben 20a, b parallel zueinander liegen und die Zuspannbewegung erzeugen können, um mit den Zuspannkolben 20a, b in Richtung X auf den zuspannseitigen Bremsbelag 4 einwirken können. Dies bedeutet, dass mit den Wälzkörperzuspanneinheiten 15a, b der Zuspannhub bei Bremsungen, insbesondere bei Betriebsbremsungen aber auch bei Feststellbremsungen überwunden wird, um den zuspannseitigen Bremsbelag 4 an die Bremsscheibe 35 zu pressen.

Es sind aber auch Bauformen mit nur einer oder mehr als zwei Wälzkörpereinheiten grundsätzlich denkbar

Nach Fig. 1 sind die Antriebsscheiben 13a, b jeweils an der Innenwand des Bremssattels 3 über ein Axialkugellager 16a, b abgestützt, das auf der vom Bremsbelag abgewandten Seite hier jeweils direkt von der einen Axialseite der Antriebsscheibe 13a, b gebildet wird sowie aus Wälzkörpern (vorzugweise Kugeln) 17 und jeweils aus einer Stützscheibe 18a, b besteht. Dabei weisen hier die Antriebsscheibe 13a, b und die Stützscheiben 18a, b jeweils an ihren zueinander ausgerichteten Seiten Wälzkörperaufnahmen für die Wälzkörper 17 auf.

Die Verzahnungen 12, 14 zwischen dem Drehhebel und den Antriebsscheiben 13a, b dienen damit also nicht oder jedenfalls nicht nur dazu, eine Nachstellvorrichtung anzutreiben sondern sie dienen dazu oder zumindest auch dazu, eines oder mehrere Wälzkörperzuspanneinheiten von Zuspannkolben 20a, 20b der Nachstellkolben anzutreiben, um eines oder mehrere Druckstücke 21a, b mittels dieser Zustelldrehantriebe bei Bremsungen mitsamt dem Bremsbelag 4 in Richtung X an eine Bremsscheibe 35 zu pressen, um durch Reibung die Bremsscheibe 35 abzubremsen.

Bei der dargestellten Ausführungsform sind die Wälzkörperzuspanneinheiten 15a, b jeweils als Kugelrampeneinheiten ausgebildet, die aus der Antriebsscheibe 13a, b, Wälzkörpern 22a, b - vorzugsweise Kugeln - und jeweils einer Rampenscheibe 23a, b gebildet werden, wobei vorzugweise sowohl die Antriebsscheiben 13a, b und die Rampenscheiben 23a, b jeweils Rampenlaufbahnen 33 für die Kugeln aufweisen.

Dabei sind die Rampenlaufbahnen 33 als Rillen in den Axialseiten der Antriebsscheibe 13a, b (an den von den Axialkugellagern abgewandten Seiten) und den Rampenscheiben 23a, b ausgebildet und verlaufen hier jeweils derart geneigt in einem konstanten oder veränderlichen Winkel alpha geneigt zu den Axialseiten der Scheiben 13a, b bzw. 23a, b bzw. geneigt zur Bremsscheibenebene (bzw. parallel zur Reibfläche es Bremsbelages 4).

Die beiden Wälzkörperzuspanneinheiten 15a, b sind jeweils von den Zuspannkolben 20a, b durchsetzt an deren bremsscheibenzugewandten Enden die Druckstücke 21a, b angeordnet oder ausgebildet sind.

Dabei ist es vorteilhaft, wenn die Zuspannkolben 20a, b jeweils als Gewindehülsen/Gewindespindelkombinationen 24a, b ausgebildet sind, die aus einer Gewindespindel 25a, b und einer Gewindehülse 26a, b aufweisen, die miteinander verschraubt sind, so dass durch ein Relativverschrauben der Gewindehülsen/Gewindespindelkombinationen 24a, b Verschleiß der Bremsbeläge 4 und der Bremsscheibe 35 ausgeglichen werden kann, da die Gesamtlänge der Zuspannvorrichtung in Richtung X zwischen der Abstützung an dem Bremsbelag 4 und dem Bremssattel 3 verändert wird. Dargestellt ist - siehe z.B. auch Fig. 2 - hier bereits, dass die Gewindehülsen 26 eine Außenverzahnung 34 aufweisen oder dass auf sie jeweils ein Zahnrad aufgesetzt ist.

Hier sind die Gewindehülsen 26a, b jeweils mit einem Flanschbereich 27a, b an den Rampenscheiben 21a, b an deren von den Kugeln abgewandten Seiten abgestützt.

Besonders vorteilhaft ist es, wenn eine Drehmomentstütze nach Art einer Traverse zwischen den beiden Wälzkörpereinheiten ausgebildet ist.

Beispielsweise kann die Drehmomentstütze 30 als Stützplatte ausgebildet sein, welches zwei beabstandete Bohrungen 31a, b aufweist (siehe auch Fig. 4a), welche von den Rampenscheiben 23a, b durchsetzt sind, so dass sie sich in diesen Bohrungen/Öffnungen drehen können. Die Stützplatte 30 ist vorzugsweise parallel zur Bremsscheibenebene bzw. parallel zu den Bremsbelägen ausgebildet und wird nicht in Zuspannrichtung X direkt von irgendeinem Bauteil mit Kräften beaufschlagt wie die Traverse bei dem eingangs geschilderten Stand der Technik. Die Drehmomentstütze ermöglicht aber in einfacher Weise die Aufnahme der an den Wälzkörpereinheiten 15a, b infolge der Krafteinleitung über den Drehhebel auftretenden Kräfte. Die Stützplatte 30 kann wenigstens eine weitere Bohrung für eine hier nicht dargestellte Nachstellvorrichtung aufweisen.

Die Druckstücke 21a, b sind hier auf die Enden der Gewindespindeln 25a, b an Zapfen aufgesetzt und greifen hier in Vertiefungen 28a, b einer Bremsbelagrückenplatte 29 des Bremsbelags 4 ein, was beispielhaft und vorteilhaft ist aber hinsichtlich der exakten Ausgestaltung variierbar ist. So könnte anstelle von zwei Druckstücken beispielweise eine übergreifende Druckplatte vorgesehen sein.

Zum Zuspannen der Scheibenbremse wird bei einer Bewegung der Kolbenstange des Bremszylinders der Drehhebel 5 um die Mittelachse des Lagerbolzens 9 gedreht, wobei über die Kegelradverzahnung auch die Antriebsscheiben 13a, b der Wälzkörperzuspanneinheiten 15a, b verdreht werden und derart hier über die Kugelrampeneinheiten die Zuspannkolben 20a, b in Richtung X der Bremsscheibe 35 unter Überwindung es Bremshubes/Arbeitshubes vorgeschoben werden, bis der Bremsbelag 4 an der Bremsscheibe 35 zur Anlage kommt, um deren Drehung abzubremsen.

Besonders vorteilhaft ist, dass sich die Reaktionskräfte (Pfeile R) zum Verschieben des Sattels direkt über die Bremskolben 20a, b mit den Wälzkörpereinheiten an der Innenseite des Bremssattels 3 abstützen und dass sich diese Kräfte nicht über eine Traverse und/oder den Drehhebel 5 hinten am Bremssattel 3 abstützen.

Fig. 1 veranschaulicht, dass der Abstand B zwischen den Zuspannkolben 20a, 20b bzw. deren Drehachsen besonders groß sein kann. Diese große Stützweite wirkt sich in einer hohen Richtwirkung auf den Bremsbelag 4 aus.

Zu erwähnen ist, dass in Fig. 1 der Einfachheit halber keine Verschlussplatte mit Dichtungen zu den Druckstücken dargestellt worden ist, wie sie aber aus dem Stand der Technik grundsätzlich bekannt ist und auch hier vorgesehen werden kann. Auch ist in Fig. 6 nicht der die Bremsscheibe 35 rahmenartig im Randbereich umgreifende Teil des hier mehrteiligen Bremssattels dargestellt, der aber in Fig. 10 zu erkennen ist, wobei der Bremssattel durchaus auch als einteiliger Bremssattel ausgebildet sein kann.

Die Zuspannung an einem reaktionsseitigen Bremsbelag kann über einen Schiebesattel erfolgen oder zum Beispiel über eine reaktionsseitige Zuspannvorrichtung oder eine verschiebliche Bremsscheibe, die an den Bremsbelag auf der gegenüberliegenden Seite der Bremsscheibe 35 gepresst wird.

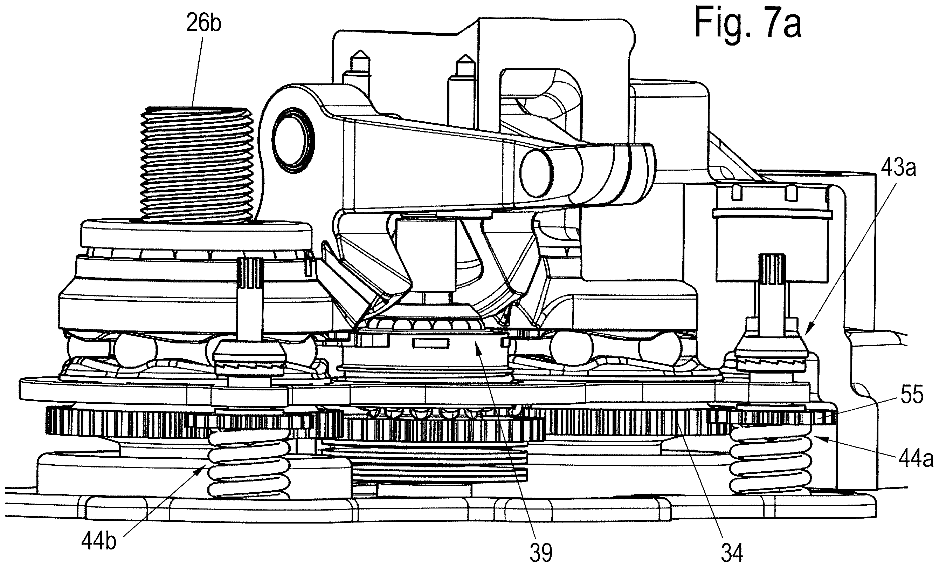

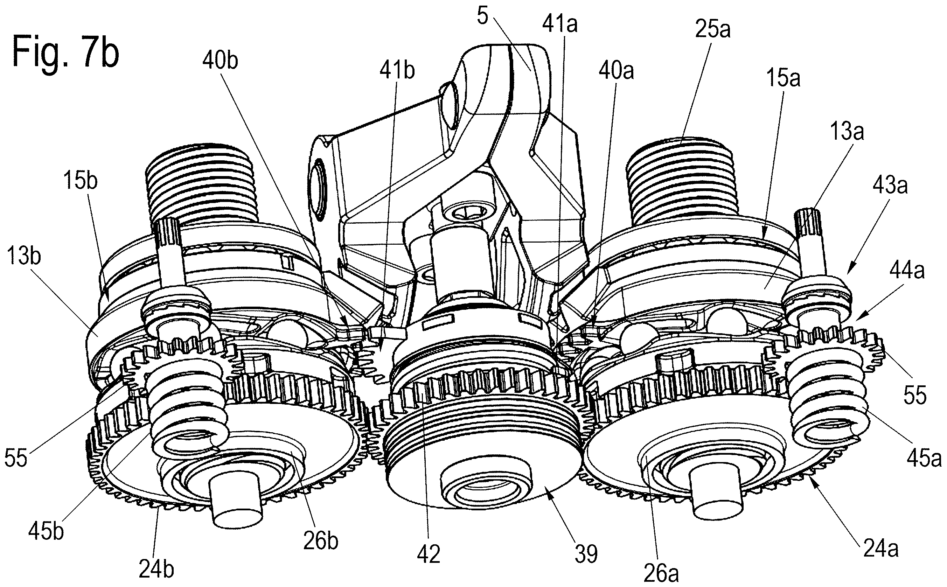

Nachdem vorstehend der prinzipielle Aufbau der Zuspannvorrichtung der Fig. 1 bis 6 und 10 erläutert wurde, seien nunmehr nachfolgend die Fig. 7, 8 und 9 näher erläutert, in welchen diese Zuspannvorrichtung um eine beispielhafte Nachstellvorrichtung und um eine Vorrichtung zur Lüftspielsicherung ergänzt ist.

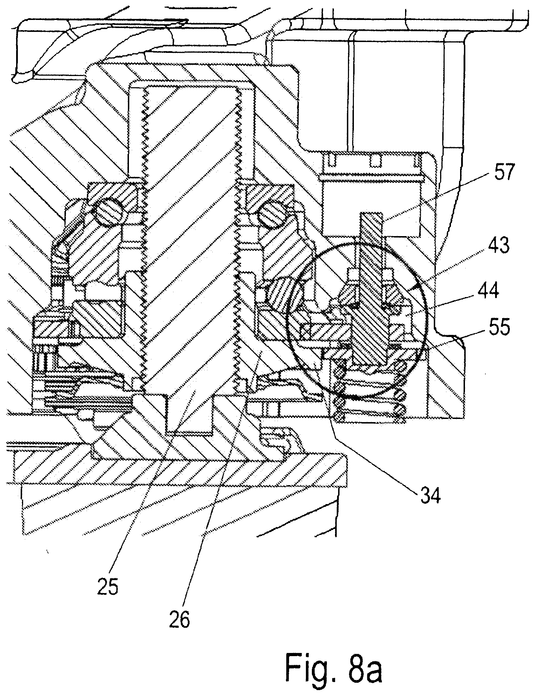

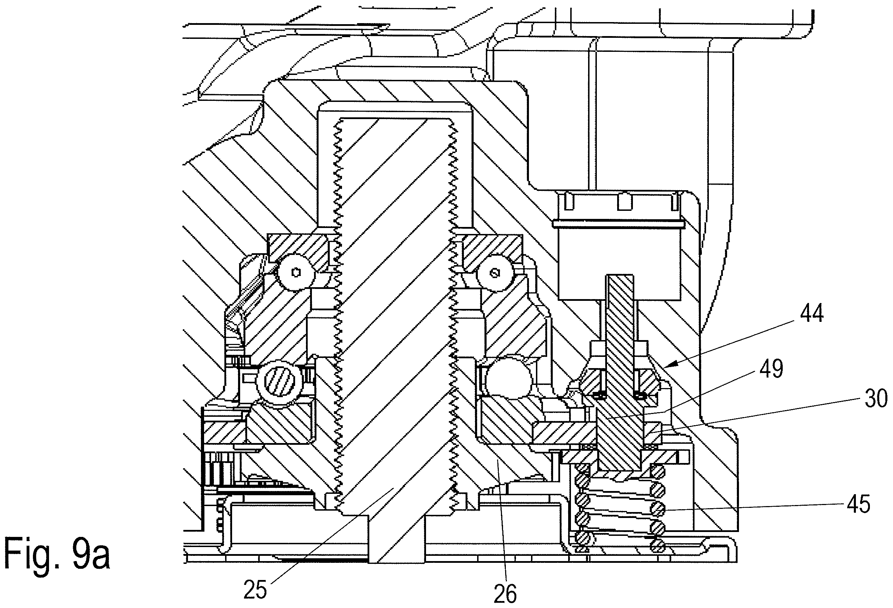

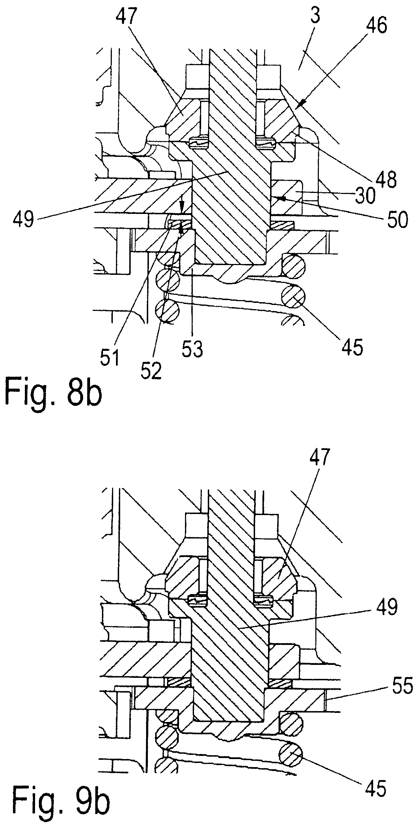

Wie weiter oben bereits näher erläutert, dient zum Ausgleich von Belag- und Scheibenverschleiß die Nachstellvorrichtung 39, welche in die Fig. 8 und 9 einzeichnet wurde.

Diese Nachstellvorrichtung 39 wird hier in einfacher Weise von einer oder beiden Antriebsscheiben 13a, b der Wälzkörpereinheit mit angetrieben, die dazu in einem axial zum Kegelradsegment 14a, b versetzten Bereich an ihrem Außenumfang ferner noch ein Zahnradsegment 40a, b aufweisen, welches zum Antrieb der Nachstellvorrichtung 39 an einem korrespondierenden drehbaren Zahnradsegment 41a, b dient. Die Antriebsscheibe 13a, b übernimmt damit in vorteilhafter und einfacher Weise eine Doppelfunktion als Antrieb der Wälzkörpereinheit und als sehr exakt arbeitender Antrieb der Nachstellvorrichtung 39, die hier baulich kompakt zwischen den Wälzkörperzuspanneinheiten 15a, b angeordnet ist. Dies kann als Weiterbildung aber auch als separate Erfindung betrachtet werden.

Die Nachstellvorrichtung 39 durchgreift zweckmäßig und raumsparend mittig den Drehhebel 5 und kann an dem Bremssattel 3 geführt sein (z.B. mit einem Ansatz in einer Hülse, hier nicht im Detail zu erkennen). Sie weist ferner vorzugsweise eine Einwegdrehkupplung und eine Überlastkupplung des Nachstellers auf (hier nicht im Detail zu erkennen) und ist zum Drehantrieb der Gewindehülsen 26a, b ausgelegt, wobei die Gewindespindeln 25a, b (z.B. am Belag 4) drehfest gehalten sind, wodurch die Nachstellfunktion realisierbar ist. Derartige Nachstellvorrichtungen sind grundsätzlich bekannt und müssen daher hier nicht im Detail dargestellt werden.

Sofern die Überlastkupplung des Nachstellers nicht anspricht und ein Lüftspiel zu verringern ist, wird vorzugweise beim Betätigen der Bremse über den Drehhebel 5 und die Antriebsscheibe 13 ein Abtriebselement wie ein Zahnrad 42 der Nachstellvorrichtung 39 verdreht, wodurch die Gewindehülsen 26a, b mit gedreht werden, so dass durch die Relativdrehung zwischen diesen Gewindehülsen 26a, b und den Gewindespindeln 25a, b die axiale Länge der Gewindestempel/Gewindetriebe 24a, b bzw. der Gewindehülsen-/Spindelkombinationen verändert wird, was die Länge der gesamten Zuspannkolben 20a, b zwischen deren Abstützung am Bremssattel 1 und dem Bremsbelag 4 ändert.

Ergänzt wird das Nachstellsystem aus der Nachstellvorrichtung 39 und den längenveränderlichen Nachstellstempeln/Gewindetrieben durch eine oder mehrere, hier vorteilhaft zwei wegabhängige Schaltkupplungen 43a, b. Diese sind hier modulartig ausgestaltet und bilden jeweils - ggf. mit einem oder mehreren weiteren Bauelementen - eine Lüftspielsicherungsvorrichtung 44a, b mit einem vorzugsweise modularen Aufbau aus (nachfolgend auch Lüftspielsicherungsmodul genannt).

Das Grundprinzip dieser wegabhängigen Schaltkupplung(en) 43a, b besteht darin, dass im nicht betätigten Zustand bzw. innerhalb der definierten Lüftspielphase die Kupplung - vorzugsweise durch eine Federkraft wenigstens einer an einem Widerlager der Scheibenbremse abgestützten Feder 45a, b - geschlossen ist und damit eine hohe Haltkraft bereitstellt, wobei eine Kopplung zwischen dem oder den Lüftspielsicherungsvorrichtungen und dem/den Gewindetrieben durch eines oder mehrere Bauelemente realisiert ist, was ein Relativverdrehen der Elemente des Gewindetriebes im eingekuppelten Zustand verhindert.

Hierzu weist jedes Lüftspielsicherungsmodul nach einer bevorzugten Ausgestaltung vorteilhaft folgende Komponenten auf:
Als erstes zu nennen ist die eigentliche Schaltkupplung 43a, die hier als Konuskupplung ausgebildet ist (siehe Fig. 8 und 9) und aus einer konusartigen Aussparung bzw. einem Konussitz 46 im Bremssattel 3 und einem axial parallel zu den Zuspannkolben beweglichen ein- oder mehrteiligen Kupplungskörper 47 mit einem konusartigen Bereich 48 bestehen, der korrespondierend zum Konussitz 46 ausgebildet und zum Eingriff in denselben ausgebildet ist.

Jeder Kupplungskörper 47 durchsetzt mit einem vorzugsweise zylindrischen Ansatz oder Ansatzteil 49 Öffnungen 50 in der Stützplatte 30, welche - siehe hierzu Fig. 7, 8 und 9 - dazu in ihren Randbereichen entsprechend so größer als in Fig. 1 bemessen worden ist, dass sie einen genügenden Platz für diese Öffnungen 50 zur Aufnahme der Ansätze 49 aufweist. Die Stützplatte 30 und der Kupplungskörper bzw. sein Ansatz 49 sind relativ zueinander verschieblich.

Auf jeden Ansatz 49 ist ferner eine Justierscheibe 51 aufgesetzt deren Außenumfang größer ist als der Außenumfang der Öffnungen 50 in der Stützplatte 30. Die Justierscheiben 51 sind auf der zu dem Bremsbelag 4 weisenden Seite der Stützplatte 30 auf dem Ansatz 49 angeordnet.

Mit den Justierscheiben 51 ist jeweils der Abstand bzw. das Spiel 52 zwischen der Stützplatte 30 und der Justierscheibe 51 veränderlich.

Zwischen dem Kupplungskörper 47 oder seinem Ansatz 49 oder einem auf dem Kupplungskörper aufgesetzten Scheibe, z.B. einem Zahnrad 55 und einem Widerlager, hier beispielsweise der die Öffnung verschließenden Verschlußplatte 54 des Bremssattels 3 ist ferner jeweils die Rückstellfeder - hier die Schraubenfeder 45 - ausgebildet, welche sich an ihrem anderen Ende an der Verschlußplatte 54 für den Bremssattel 3 abstützt.

Eine Kopplung zwischen den Schaltkupplungen 43a, b bzw. den gesamten Lüftspielmodulen und den Gewindetrieben 24a, b erfolgt nach Fig. 8 und 9 auf einfache Weise mittels dem jeweils einen Zahnrad 55, das auf dem Ansatz 49 ausgebildet oder angebracht ist und das mit dem im Durchmesser größeren Zahnrad 34 an den Gewindetrieben 24 - hier an den jeweiligen Gewindehülsen 26 - kämmt.

Die Funktion dieser Lüftspielsicherungsvorrichtungen 44a, b ist wie folgt.

Im gelösten Zustand der Scheibenbremse ist die Schaltkupplung 43 geschlossen, hier dadurch, dass der Kupplungskörper 47 durch die Federkraft der Feder 45 in den Konussitz 46 gepresst wird (Fig. 8a, b).

Damit können sich weder die Zahnräder 55 noch die mit ihnen kämmenden Zahnräder 34 an den Gewindehülsen 26 drehen, so dass keine Relativdrehung zwischen der Gewindehülse 26 und der Gewindespindel 25 auftreten kann.

Ein unbeabsichtligtes Verstellen des Lüftspiels am Bremsbelag 4 wird damit auf einfache Weise sicher verhindert.

Bei einer Bremsung wird von der Zuspannvorrichtung auch die Stützplatte 30 in Richtung der Bremsscheibe 35 verschoben, wobei sie sich zunächst auf dem Kupplungskörper bzw. dessen Ansatz 49 in Richtung der Bremsscheibe verschiebt. Da der Konuskörper 48 in diesem Zustand zunächst weiter von der an der Verschlußplatte 54 abgestützten Schraubenfeder 45 (Siehe auch Fig. 7) in den Konussitz 47 gedrückt wird, ist die Schaltkupplung geschlossen und die Gewindehülsen sind an ihrem Außenumfang durch die Zahnräder 34, 55 drehfest gehalten.

Erst wenn die Stützplatte 30 an der Justierscheibe 51 zur Anlage kommt, wird diese beim weiteren Zuspannen den Kupplungskörper 47 bzw. dessen Ansatz 49 ansetzen und den Kupplungskörper 47 aus dem Konussitz 46 anheben.

Damit wird die wegabhängige Schaltkupplung geöffnet, so dass die Drehung des Zahnrades 55freigegeben und eine Nachstelldrehung der Gewindehülsen 26a, b möglich wird (Fig. 9a, b).

Die Lüftspielsicherungsvorrichtungen bzw. hier -module 44a, b sind konstruktiv einfach aufgebaut und dabei dennoch sehr funktionssicher ausgestaltet. Die Drehung des oder der Zahnräder 46 kann - z.B. an einem Ansatz 57 und eine Drehmomentübertragungskontur aufweist - für weitere Aufgabe wie eine Sensierung des Nachstellweges genutzt werden.

Die Funktion der Lüftspielsicherungsvorrichtungen 44a, b ist zusammengefasst grundsätzlich wie folgt.

Nach einem Überwinden eines definierten Spiels wird oder werden die Schaltkupplung(en) 43a, b vom Zuspannmechanismus der Bremse geöffnet.

Die Haltekraft wird somit signifikant reduziert und im Falle eines zu großen Lüftspiels kann dadurch die Nachstellung ohne Beeinträchtigung eine Lüftspielanpassung vornehmen.

Da die Zahnräder 55 an den Lüftspielsicherungsmodulen vorzugsweise deutlich kleiner sind als die Zahnräder 34 der Gewindetriebe 24 ergibt sich die Möglichkeit - entsprechend dem Übersetzungsverhältnis von vorzugsweise mehr als 2/1 - mit einem relativ kleinem Moment an den Lüftspielsicherungsmodulen relativ hohe Haltemomente für die Gewindetriebe zu erreichen.

Die Erfindung ist aber auf diese Ausgestaltung nicht beschränkt.

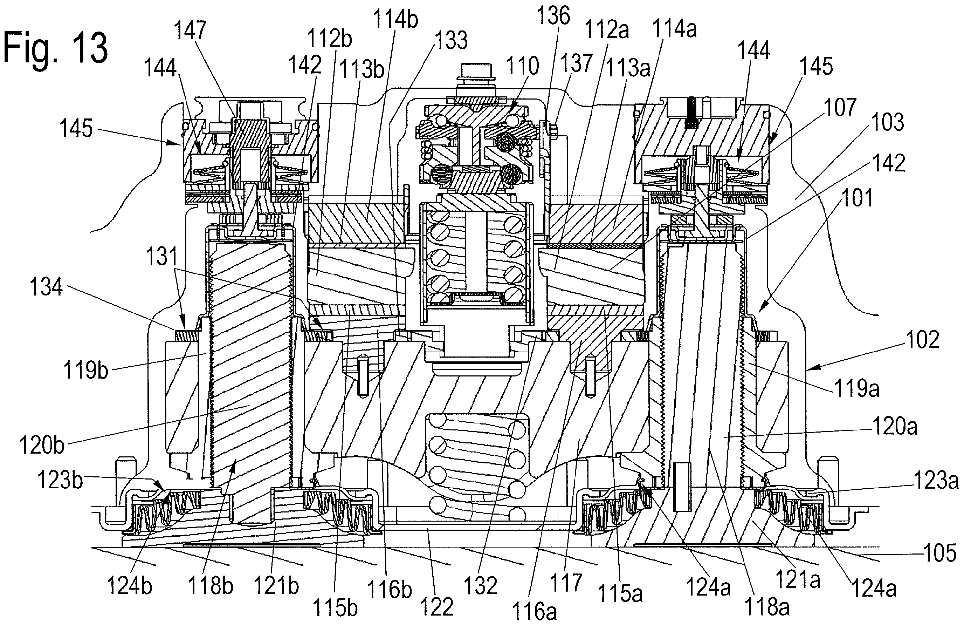

Fig. 13 zeigt einen Schnitt durch einen Abschnitt einer eine Zuspannvorrichtung 101 aufnehmenden Öffnung 102 eines Bremssattels 103 einer von einem (hier nicht dargestellten) Aktuatorelement betätigbaren Scheibenbremse. Bei dem Aktuatorelement handelt es sich vorzugsweise um eine Kolbenstange eines pneumatisch oder elektromotorisch oder federbetätigten Bremszylinders (hier nicht dargestellt).

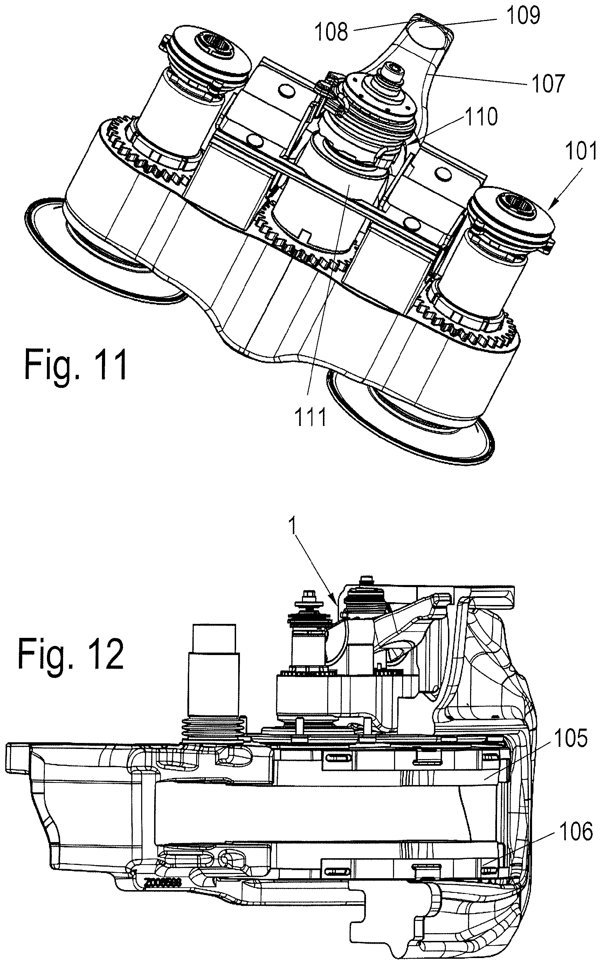

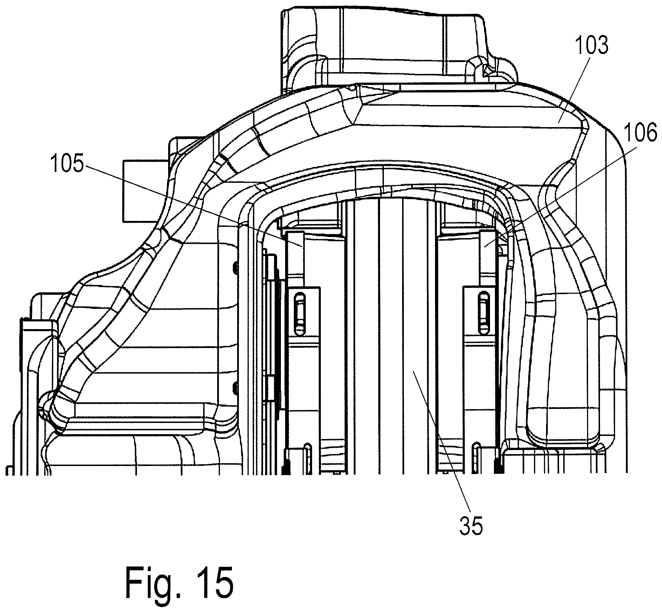

Der ein- oder mehrteilige Bremssattel 103 ist vorzugsweise als ein Schiebesattel ausgebildet, der an einem in Fig. 15 zu erkennenden Bremsträger - beispielsweise an Lagerbolzen - verschiebbar geführt ist. Der Bremssattel 103 umgreift - beispielsweise nach Art der Fig. 10 oder 12 - rahmenartig einen Randabschnitt einer Bremsscheibe 35 (siehe speziell hierzu auch Fig. 4b)

Beidseits der Bremsscheibe 35 sind Bremsbeläge 105, 106 angeordnet. Bei Bremsungen wird mit der Zuspannvorrichtung 101 der zuspannseitige Bremsbelag 105 direkt gegen die Bremsscheibe 35 gepresst, wohingegen der reaktionsseitige Bremsbelag 106 mit dem verschieblichen Bremssattel 103 gegen die Bremsscheibe 35 gezogen wird Siehe Fig. 15).

Zur Realisierung einer Exzenterbetätigung weist die Zuspannvorrichtung 101 (siehe jetzt die beispielhafte bevorzugte Ausführung der Fig. 1 und 3) einen schwenkbaren Drehhebel 107 auf, der an seinem einen Ende 108 eine Ausnehmung 109 für den Eingriff der Kolbenstange aufweist. An seinem anderen Ende weist er hier mittig eine Ausnehmung zum Übergreifen einer im Wesentlichen zylindrisch ausgestalteten Baueinheit auf, die eine Nachstellvorrichtung 110 ausbildet.

Der Drehhebel 107 weist ferner hier beidseits der Ausnehmung für die Nachstellvorrichtung 110 zwei Exzenteransätze 112a, b auf, die sich jeweils über ein Schwenklager 113a, b an jeweils einem Stützstift 114a, b abstützen, welche an der Innenseite des Bremssattels 103 abgestützt sind. An der von den Stützstiften 114a, b abgewandten Seiten ist der Drehhebel 107 an seinen Exzenterabschnitten 112a, b über jeweils ein weiteres Schwenklager 115a, b an jeweils einem vorzugsweise einstückigen Lagerbock(element) 116a, b abgestützt, die wiederum an einer Traverse 117 (die quer zur Bremsscheibe ausgerichtet ist) abgestützt sind, die von einem oder hier zwei Zuspannkolben mit Gewindetrieben 118a, b durchsetzt ist, so dass die Traverse hier zwischen diesen zwei Zuspannkolben 118a, b auch eine Brücke bildet. Die Schwenklager 113, 115 können als Gleit- oder Wälzlager ausgebildet sein.

Die Druck-/Zuspannstempel weisen hier jeweils eine Gewindehülse 119a, b, eine Gewindespindel 120a, b und jeweils wenigstens ein an den Gewindesspindeln 120a, b angeordnetes Druckstück 121a, b auf (Fig. 1, 2). Diese Anordnung ist bevorzugt, da die zwei Gewindetrieben bzw. den gesamten Zuspannkolben mit den Druckstücken eine gleichmäßige Kraftverteilung beim Zuspannen und einen weitestgehend gleichmäßigen Verschleiß insbesondere des zuspannseitigen Bremsbelages 105 sicherstellen. Die Erfindung ist aber nicht auf diese Variante beschränkt.

An ihrer zur Bremsscheibe 35 gewandten Seite ist die Öffnung 102 von der Verschlußplatte 122 verschlossen, die Öffnungen 123a, b aufweist, welche von den Gewindespindeln 120a, b durchsetzt ist, wobei die Spalte zwischen den Druckkolben 120a, b und der Verschlußplatte 122 von Dichtungsanordnungen 124a, b abgedichtet sind (Fig. 1).

Hier nicht zu erkennen ist, dass die Lagerböcke 116a, b jeweils an ihren zu den Exzenterabschnitten 112a, b des Drehhebels 107 gewandten Seiten eine hier teilzylindrische Ausnehmung aufweisen, in welche jeweils eines der Schwenklager (hier) 115a und einer der Exzenteransätze (hier) 112a eingreift.

An ihrer zur Traverse 117 gewandten Seite stützen sich die Lagerböcke 116a, b jeweils in einem oder mehreren Kontaktbereichen an der Traverse 117 ab.

Vorzugsweise greifen die Lagerböcke 116a, b und die Traverse 117 ferner zur Sicherstellung eines korrekten Sitzes an der Traverse 117 formschlüssig ineinander.

Diese vorteilhafte Ausgestaltung von Drehhebel 107, Lager 115 und wenigstens einem Lagerbockelement 116 ist bei Zuspannvorrichtungen verschiedener Art realisierbar.

Nach der Ausgestaltung der Fig. 13 wird sie von einer besonders vorteilhaften Getriebeanordnung 131 zum synchronen Antrieb der Gewindetriebe ergänzt.

Diese Getriebeanordnung 131 weist hier (Fig. 3, 6, 7, 8) eine Anordnung von miteinander kämmenden, in einer Ebene liegenden Zahnrädern auf, die an der zum Drehhebel 112 weisenden Seite der Traverse 117 zwischen der Traverse 117 und dem Drehhebel 112 angeordnet sind.

Nach Fig. 103 ist vorgesehen, dass die Lagerböcke 116a, b diese Zahnräder teilweise übergreifen, ohne deren Drehung zu blockieren , so dass die Zahnräder unmittelbar an der Traverse 117 angeordnet sein können. Sie können an dieser oder an der Traverse und an den Gewindehülsen drehbar gelagert sein.

Einzelne der Zahnräder greifen jeweils in eine Aussparung an den von den Lagerböcken 116a, b gewandten Seiten der Lagerböcke 116a, b ein, so dass die Lageböcke nur seitlich der Zahnräder 133 an der Traverse 117 abgestützt sind.

Derart wird das Synchronisationsgetriebe 131 besonders geschützt zentral in der Zuspannvorrichtung 101 angeordnet, was auch den Vorteil mit sich bringt, dass die Zuspannstempel 118 axial relativ kurz gestaltet werden können.

Das mittlere Zahnrad 132 ist hier das Abtriebszahnrad der Nachstellvorrichtung 10, welches Nachstelldrehbewegungen der Nachstellvorrichtung 110 über die mittleren Zahnräder 133a, b die von den Lagerböcken 16,a,b übergriffen werden, auf Antriebszahnräder 134a, b übertragen, die drehfest auf die Gewindehülsen 119 der Druckstempel 118 aufgesetzt sind. Die Zahnräder 133 sind hier auf den Zentrieransätzen drehbar gelagert.

Bei Drehungen des Antriebszahnrades 132 werden die beiden Gewindehülsen 119a, b gedreht, so dass die (z.B. an den Bremsbelägen) drehfest gehaltenen Gewindespindeln 120 axial bewegt werden, um Belagverschleiß auszugleichen.

Die Getriebeanordnung 131 zur Synchronisation und/oder zum Antrieb der wenigstens einen Gewindehülse 119a, b oder der wenigstens einen Gewindespindel 120a, b ist derart besonders sicher geschützt sowie platzsparend in die Zuspannvorrichtung 101 integriert.

Ein besonderer Vorteil der Lagerböcke 116 besteht ferner darin, dass sie es möglich machen, unterschiedliche Materialien oder jedenfalls unterschiedlich bearbeitete Materialien (Guss, spannende Bearbeitung, Schmieden usw.) für die Lagerböcke 116 und die eigentliche "reduzierte" Traverse 117 zu verwenden, so dass sie jeweils an ihre Aufgabe optimal angepasst werden können.

Die Lagerböcke 116 sind dabei in angepasster Ausgestaltung auch bei Bremsen einsetzbar, an welche sich der Drehhebel über eine Stützwalze oder Stützstifte nicht am Bremssattel sondern an der Traverse abstützt, wobei dann die größeren Exzenteransätze am Inneren des Bremssattels abgestützt sind (hier nicht dargestellt).

Nachfolgend sei die vorteilhafte Kopplung zwischen der Nachstellvorrichtung 110 und den Gewindetrieben näher betrachtet.

Die Nachstellvorrichtung 110 dient dazu, bei Bremsungen den Verschleiß der Bremsscheibe 35 und der Bremsbeläge 5, 106 auszugleichen, indem die Länge der Gewindetriebe bzw. gesamten Zuspannstempel vergrößert wird.

Hierzu wird bei Bremsungen über eine Antriebsgetriebeverbindung - hier eine Antriebsgabel aus Antriebsfingern 136 am Drehhebel 107 (siehe Fig. 9, 10, 11), in die eine Antriebsgabel 137 der Nachstellvorrichtung 110 zahnähnlich eingreift - über Getriebeelemente der Nachstellvorrichtung 110 (die typischerweise wieder einen Freilauf und eine Einwegdrehkupplung umfassen) im Falle eines zu großen Lüftspiels ggf. eine Nachstelldrehbewegung des Antriebsrades 132 zugelassen bzw. erzeugt, welche über die Zahnräder 133a,b; 134a,b hier die Gewindehülsen 119a, b antreibt (wobei es auch denkbar wäre, derart die Gewindespindeln 20a, b anzutreiben, wenn die Gewindespindeln 120 beispielsweise direkt in Innengewinde der Traverse 117 eingreifen würden; hier nicht dargestellt).

Werden die in der Traverse 117 axial ortsfest angeordneten aber drehbaren Gewindehülsen 119a, b verdreht, verlängert sich die Gesamtlänge der Zuspannstempel/der Gewindetriebe 118a, b, da die Gewindespindeln 120 unverdrehbar aber axial beweglich gehalten sind (z.B. an den Bremsbelägen).

Die Gewindehülsen 119a, b sind nach Fig. 13 an ihren von den Druckstücken abgewandten Enden je drehfest mit einem Blechtopf 142 verbunden, der sie vorzugsweise zentriert und an der Traverse 117 hält.

An den Blechtöpfen 142 sind an abgedichtet verschließbaren Sattelöffnungen 145 vorzugsweise über hier eine flexible Drehmomentkupplung 146 in verschiedener Weise vorteilhaft weitere Funktionen wie ein Rückdrehen an einem bei einem zu großen Drehmoment abscherbaren Rückstelladapter 147 oder eine Sensierung der Nachstelldrehungen oder dgl. realisierbar.

Auch nach Fig. 13 werden zwei Lüftspielsicherungsvorrichtungen nach Art von Modulen eingesetzt. Auch diese Lüftspielsicherungsvorrichtungen 144 sind mit den Nachstellkomponenten gekoppelt, allerdings über die Drehmomentübertragungselemente 146.

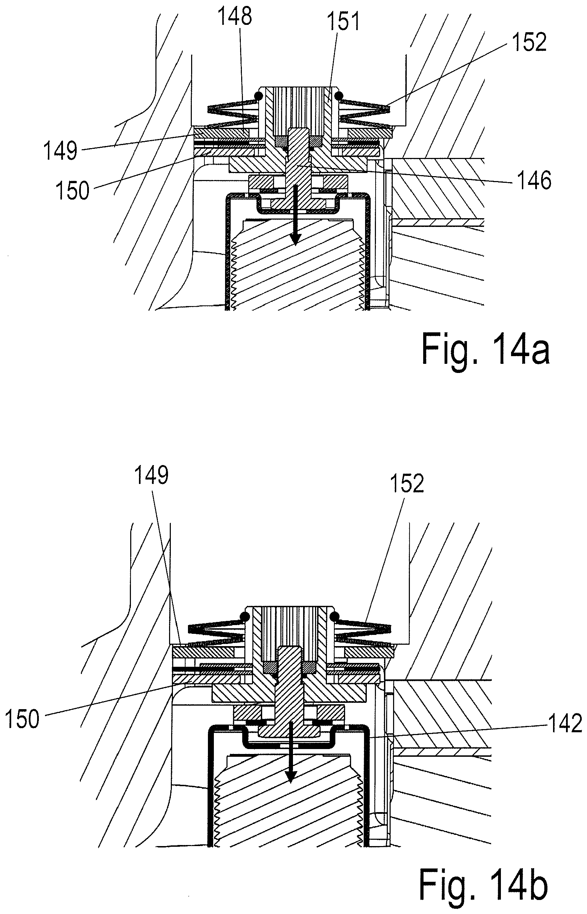

Die Lüftspielsicherungsvorrichtungen 144 weisen hier jeweils eine wegabhängige Schaltkupplung auf, die hier als Lamellenkupplung 143 ausgebildet ist, welche hier zudem jeweils in axialer Verlängerung der Gewindetriebe bzw. der gesamten Zuspannkolben an deren vom Bremsbelag 105 abgewandten sattelseitigen Ende angeordnet sind (Fig. 14a, b).

Wie in Fig. 14 a zu erkennen, ist jede Lammellenkupplung 143 mit einer von einer Bohrung 148 durchsetzten ersten ortsfest angeordneten Kupplungsscheibe 149 an einem Innenumfangsvorsprung in der Ausnehmung 145 am Bremssattel 103 abgestützt.

Die Bohrung 148 durchsetzt ein Ansatzteil 151 an der zweiten Kupplungsscheibe 150, die zwischen dem Topf 142 und der ersten Kupplungsscheibe 149 angeordnet ist. Mittels einer Tellerfederanordnung 152 wird der Kupplungssitz vorgespannt.

Wird jetzt die Zuspannvorrichtung betätigt, werden die Gewindetriebe 118 als Ganzes in Richtung der Bremsscheibe bewegt.

Dabei werden die Drehmomentübertragungselemente 146 mitgezogen, welche nach überschreiten eines Spiels die zweite Kupplungsscheibe mitziehen bzw. mit in Richtung der Bremsscheibe bewegen, so dass die Schaltkupplung geöffnet wird. In dieser Position ist die Drehung des Blechtopfes 142 und damit der Gewindehülsen 119 sowie der Kupplung 143 freigegeben, so dass eine Nachstellung durch die Nachstellvorrichtung 110 erfolgen kann. Wenn das Drehmomentübertragungselement begrenzt axial bzw. parallel zu den Gewindetrieben 118 beweglich ist, kann durch diese Beweglichkeit ein Spiel bis zum Ansprechen der Kupplung vorgegeben werden.

**Bezugszeichen**

| | |
|---|---|
| Zuspannvorrichtung | 1 |
| Öffnung | 2 |
| Bremssattel | 3 |
| Bremsbelag | 4 |
| Drehhebel | 5 |
| Hebelarm | 6 |
| Vertiefung | 7 |
| Antriebsradsegmente | 8a, 8b |
| Hebellagerbolzen | 9 |
| Bohrungen | 10a, b |
| Schellenteil | 11 |
| Kegelradsegment | 12 |
| Antriebsscheibe | 13 |
| Kegelradsegment | 14 |
| Wälzkörperzuspanneinheit | 15 |
| Axialkugellager | 16 |
| Wälzkörper | 17 |
| Stützscheibe | 18 |
| Zuspannkolben | 20a, 20b |
| Druckstücke | 21a, 21b |
| Wälzkörper | 22a, b |
| Rampenscheibe | 23a, b |
| Gewindetriebe | 24a, b |
| Gewindespindel | 25a, b |
| Gewindehülse | 26a, b |
| Flanschbereich | 27a, b |
| Vertiefung | 28a, b |
| Rückenplatte | 29 |
| Drehmomentstütze | 30 |
| Bohrungen | 31a, b |
| Gleitlager | 32a, b |
| Zahnrad | 34 |
| Bremsscheibe | 35 |
| Bremsträger | 36 |
| Bremsbelag | 37 |
| Öffnung | 38 |
| Nachstellvorrichtung | 39 |
| Zahnradsegment | 40a, b |
| Zahnradsegment | 41a, b |
| Zahnrad | 42 |
| Schaltkupplung | 43a, b |
| Lüftspielsicherungsvorrichtung | 44a, b |
| Feder | 45 |
| Konussitz | 46 |
| Kupplungskörper | 47 |
| Konusartiger Bereich | 48 |
| Ansatz | 49 |
| Öffnungen | 50 |
| Justierscheibe | 51 |
| Spiel | 52 |
| Flanschscheibe | 55 |
| Verschlußplatte | 54 |
| Zuspannvorrichtung | 100 |
| Öffnung | 102 |
| Bremssattel | 103 |
| Bremsscheibe | 35 |
| Bremsbeläge | 105, 106 |
| Drehhebel | 107 |
| Ende | 108 |
| Ausnehmung | 109 |
| Nachstellvorrichtung | 110 |
| Exzenteransätze | 112a, b |
| Schwenklager | 113a, b |
| Stützstifte | 114a, b |
| Schwenklager | 115a, b |
| Lagerböcke | 116a, b |
| Traverse | 117 |
| Zuspannstempel | 118a, b |
| Gewindehülsen | 119a, b |
| Gewindetriebe | 120a, b |
| Druckstücke | 121a, b |
| Getriebeanordnung | 131 |
| Aussparung | 135a, b |
| Antriebsfinger | 136 |
| Antriebsgabel | 137 |
| Laschen | 138 |
| Blechtopf | 142 |
| Lamellenkupplung | 143 |
| Lüftspielsicherungsvorrichtungen | 144 |
| Sattelöffnungen | 145 |
| Drehmomentkupplung | 146 |
| Rückstelladapter | 147 |
| Bohrung | 148 |
| Kupplungsscheibe | 149 |
| Ansatz | 151 |
| Kupplungsscheibe | 150 |
| Ansatzteil | 151 |
| Tellerfederanordnung | 152 |

## Patentansprüche

1. Scheibenbremse mit einem Bremssattel (3), der einen Randbereich einer Bremsscheibe (35) übergreift,
a) mit einer im Bremssattel angeordneten Zuspannvorrichtung (1), die zumindest zum Anlegen eines zuspannseitigen Bremsbelages an die Bremsscheibe (35) ausgelegt ist,
b) wobei die Zuspannvorrichtung ein Nachstellsystem zum Einstellen eines Lüftspiels aufweist, das eine Nachstelleinrichtung (39, 110) und wenigstens einen oder mehrere Gewindetrieb(e) aus einer Gewindespindel (25, 120) und einer relativ dazu drehbaren Gewindehülse (26, 119) oder einem sonstigen ein Innengewinde aufweisenden Element wie eine Traverse aufweist,
c) wobei der wenigstens eine Gewindetrieb beim Zuspannen der Scheibenbremse axial in Richtung der Bremsscheibe (35) verschiebbar ist und wobei die axiale Länge des Gewindetriebes mittels der Nachstellvorrichtung (39) durch Relativverdrehung der Elemente des Gewindetriebe (20) veränderlich ist,
d) wobei wenigstens eine Lüftspielsicherungsvorrichtung mit einer oder mehreren wegabhängigen Kupplung(en) als Schaltkupplungen (43, 143) vorgesehen ist/sind, die mit dem wenigstens einen Gewindetrieb oder einem sonstigen Drehelement des Nachstellsystems direkt oder indirekt gekoppelt ist/sind,
**gekennzeichnet dadurch,**
e) **dass** die Schaltkupplung(en) im gelösten Zustand der Bremse geschlossen ist/sind, so dass sie Relativverdrehungen zwischen dem oder den Elementen des Gewindetriebs oder der Gewindetriebe verhindert(en) und die im zugespannten Zustand der Bremse geöffnet ist/sind und nach Überwinden eines Mindesthubes eine Nachstellbewegung des Gewindetriebes freigibt/freigeben.

2. Scheibenbremse nach Anspruch 1, **dadurch gekennzeichnet, dass** die Scheibenbremse eine pneumatisch oder elektromotorisch betätigbare Scheibenbremse ist.

3. Scheibenbremse nach Anspruch 1 oder 2, **dadurch gekennzeichnet, dass** die Kupplung als Schaltkupplung (43, 143) mit weiteren Bauelementen baulich zu einem Lüftspielsicherungsmodul (44, 144) zusammengefasst ist.

4. Scheibenbremse nach Anspruch 1, 2 oder 3, **dadurch gekennzeichnet, dass** die wenigstens eine Lüftspielsicherungsvorrichtung (44, 144) radial neben dem zugehörigen Gewindetrieb angeordnet ist.

5. Scheibenbremse nach einem der vorstehenden Ansprüche, **dadurch gekennzeichnet, dass** die wenigstens eine Lüftspielsicherungsvorrichtung (44, 144) über eine Verzahnung mit einer entsprechenden Verzahnung mit der Gewindehülse oder der Gewindespindel kämmt.

6. Scheibenbremse nach einem der vorstehenden Ansprüche, **dadurch gekennzeichnet, dass** die wenigstens eine Lüftspielsicherungsvorrichtung (44, 144) in axialer Verlängerung des zugehörigen Gewindetriebes angeordnet ist.

7. Scheibenbremse nach einem der vorstehenden Ansprüche, **dadurch gekennzeichnet, dass** die wenigstens eine Lüftspielsicherungsvorrichtung (44, 144) an der von der Bremsscheibe abgewandten Seite des Gewindetriebes in axialer Verlängerung des zugehörigen Gewindetriebes angeordnet ist.

8. Scheibenbremse nach einem der vorstehenden Ansprüche, **dadurch gekennzeichnet, dass** jedem Gewindetrieb ein eigenes zugehöriges Lüftspielsicherungsmodul zugeordnet ist.

9. Scheibenbremse nach einem der vorstehenden Ansprüche, **dadurch gekennzeichnet, dass** die wenigstens eine Schaltkupplung (43, 143) als Reibungskupplung ausgebildet ist.

10. Scheibenbremse nach Anspruch 9, **dadurch gekennzeichnet, dass** die wenigstens eine Schaltkupplung (43, 143) als Konuskupplung oder als Lamellenkupplung ausgebildet ist.

11. Scheibenbremse nach einem der vorstehenden Ansprüche, **dadurch gekennzeichnet, dass** die wenigstens eine Schaltkupplung als formschlüssige Schaltkupplung ausgebildet ist.

12. Scheibenbremse nach Anspruch 11, **dadurch gekennzeichnet, dass** die wenigstens eine Schaltkupplung als Zahnkupplung ausgebildet ist.

13. Scheibenbremse nach einem der vorstehenden Ansprüche, **dadurch gekennzeichnet, dass** jede Schaltkupplung ferner einen Anschlag zum Lösen der Schaltkupplung aus ihrer geschlossenen Stellung durch ein Element der Zuspannvorrichtung aufweist.

14. Scheibenbremse nach einem der vorstehenden Ansprüche, **dadurch gekennzeichnet, dass** jede Schaltkupplung ferner eine Rückstellfeder (45) aufweist, welche die Schaltkupplung in die geschlossene Stellung presst.

15. Scheibenbremse nach einem der vorstehenden Ansprüche, **dadurch gekennzeichnet, dass** jeder Schaltkupplung eine Einrichtung zur Einstellung eines Ansprechspieles beim Betätigen der Zuspannvorrichtung zugeordnet ist.

16. Scheibenbremse nach einem der vorstehenden Ansprüche, **dadurch gekennzeichnet, dass** die Einrichtung zur Spieleinstellung eine Justierschraube oder Justiermutter oder eine Justierscheibe aufweist.

17. Scheibenbremse nach einem der vorstehenden Ansprüche, **dadurch gekennzeichnet, dass** das oder die Lüftspielsicherungsmodul(e) mittels einer Getriebeverbindung mit dem Gewindetrieb gekoppelt sind.

18. Scheibenbremse nach Anspruch 17, **dadurch gekennzeichnet, dass** das oder die Lüftspielsicherungsmodul(e) einem oder mehrerer Zahnräder und/oder Kegelräder und/oder einem Zugmittelgetriebe und/oder einer weiteren Schaltkupplungen mit dem Gewindetrieb gekoppelt sind.

19. Scheibenbremse nach einem der vorstehenden Ansprüche, **dadurch gekennzeichnet, dass** die Antriebsbewegung der Nachstellvorrichtung beim Zuspannen zunächst in einer Federspeicherkupplung der Nachstellvorrichtung gespeichert wird, so dass sich dann, wenn dann, nach Überwindung des Lüftspielhubs, die Schaltkupplung (43, 143) frei geschaltet wird, die gespeicherte Energie in der Nachstellvorrichtung freisetzen und die Nachstellgeschwindigkeit erhöhen kann, falls das Lüftspiel ein vergrößertes Maß aufweist.

20. Scheibenbremse nach einem der vorstehenden Ansprüche, **dadurch gekennzeichnet, dass** die Zuspannvorrichtung wenigstens eine Wälzkörperzuspanneinheit (15a, b) aufweist, die wenigstens einen senkrecht zur Bremsscheibe beweglichen Zuspannkolben (21a, b) aufweist und die zum Überwinden des Arbeitshubes bzw. zum Anlegen des zuspannseitigen Zuspannkolbens mit dem Bremsbelag an die Bremsscheibe (35) infolge eines Verschwenkens eines im Bremssattel angeordneten Drehhebels bei Bremsungen ausgelegt ist und die wenigstens eine um eine parallel zur Zuspannrichtung (X) ausgerichtete Achse drehbare Antriebsscheibe (13) aufweist.

21. Scheibenbremse nach Anspruch 20, **dadurch gekennzeichnet, dass** eine Antriebsverbindung zwischen dem Drehhebel (5, 6) und der wenigstens einen Wälzkörperzuspanneinheit ausgebildet ist.

22. Scheibenbremse nach Anspruch 20 oder 21, **dadurch gekennzeichnet, dass** die Nachstellvorrichtung (39) von wenigstens einer Antriebsscheibe (13a, b) der Wälzkörpereinheit mit angetrieben wird.

23. Scheibenbremse nach einem der vorstehenden Ansprüche 1 bis 19,
**dadurch gekennzeichnet, dass** die Zuspannvorrichtung ferner folgendes aufweist:
a) einen Drehhebel (117), hier versehen mit einem oder mehreren Exzenterabschnitten (112a, b);
b) eine Traverse (112), auf welche der Drehhebel (117) vorzugsweise über wenigstens ein Zwischenelement einwirkt; und
c) wenigstens zwei an der Traverse (117) angeordnete oder ausgebildete Zuspannstempel (118a, b);
d) eine Getriebeanordnung (131) zum Übertragen der Drehbewegungen der Nachstellvorrichtung (110) auf Getriebeelemente der Zuspannstempel (118) und/oder zur Synchronisation der Drehbewegungen von Elementen der Zuspannstempel (118).

## Claims

1. Disc brake with a brake calliper (3) encompassing an edge region of a brake disc (35),
a) comprising an application device (1) located in the brake calliper and designed for applying at least an application-side brake pad to the brake disc (35),
b) wherein the an application device comprises an adjusting system for adjusting a clearance, which adjusting system has an adjusting device (39, 110) and one or more threaded drive(s) consisting of a threaded spindle (25, 120) and a threaded sleeve (26, 119) rotatable relative thereto or another element having a female thread, such as a crossbar,
c) wherein the at least one threaded drive is axially displaceable towards the brake disc (35) during the application of the disc brake, and wherein the axial length of the threaded drive can be changed by means of the adjusting device (39) by a relative rotation of the elements of the threaded drive (20),
d) wherein at least clearance securing device with one or more distance-dependent clutch(es) designed as switching clutch(es) (43, 143) is provided, which clearance securing device(s) is/are directly or indirectly coupled to the at least one threaded drive or to another rotary element of the adjusting system,
**characterised in that**
e) the switching clutch(es) is/are closed in the released state of the brake, so that it/they prevent(s) relative rotations between the elements of the threaded drive(s), and open in the applied state of the brake to enable an adjusting movement of the threaded drive after overcoming a minimum stroke.

2. Disc brake according to claim 1, **characterised in that** the disc brake can be actuated pneumatically or by an electric motor.

3. Disc brake according to claim 1 or 2, **characterised in that** the clutches designed as switching clutches (43, 143) are combined with other components to form a clearance securing module (44, 144).

4. Disc brake according to claim 1, 2 or 3, **characterised in that** the at least one clearance securing device (44, 144) is located radially adjacent to the associated threaded drive.

5. Disc brake according to any of the preceding claims, **characterised in that** the at least one clearance securing device (44, 144) meshes by way of a toothing with a corresponding toothing of the threaded sleeve or the threaded spindle.

6. Disc brake according to any of the preceding claims, **characterised in that** the at least one clearance securing device (44, 144) is arranged in axial extension of the associated threaded drive.

7. Disc brake according to any of the preceding claims, **characterised in that** the at least one clearance securing device (44, 144) is located on that side of the threaded drive which is remote from the brake disc in axial extension of the associated threaded drive.

8. Disc brake according to any of the preceding claims, **characterised in that** each threaded drive is assigned its own associated clearance securing module.

9. Disc brake according to any of the preceding claims, **characterised in that** the at least one switching clutch (43, 143) is designed as a friction clutch.

10. Disc brake according to any of the preceding claims, **characterised in that** the at least one switching clutch (43, 143) is designed as a cone clutch or as a multiplate clutch.

11. Disc brake according to any of the preceding claims, **characterised in that** the at least one switching clutch is designed as a positive switching clutch.

12. Disc brake according to claim 11, **characterised in that** the at least one switching clutch is designed as a tooth clutch.

13. Disc brake according to any of the preceding claims, **characterised in that** each switching clutch furthermore has a stop for releasing the switching clutch from its closed position by an element of the application device.

14. Disc brake according to any of the preceding claims, **characterised in that** each switching clutch furthermore has a return spring (45), which pushes the switching clutch into the closed position.

15. Disc brake according to any of the preceding claims, **characterised in that** each switching clutch is assigned a device for adjusting a response play during the actuation of the application device.

16. Disc brake according to any of the preceding claims, **characterised in that** the device for play adjustment comprises an adjusting screw, an adjusting nut or an adjusting washer.

17. Disc brake according to any of the preceding claims, **characterised in that** the clearance securing module(s) is/are coupled to the threaded drive by means of a threaded connection.

18. Disc brake according to claim 17, **characterised in that** the clearance securing module(s) is/are coupled to the threaded drive by means of one or more gears and/or bevel gears and/or a traction means mechanism and/or a further switching clutch.

19. Disc brake according to any of the preceding claims, **characterised in that** the drive movement of the adjusting device is initially stored in a spring clutch of the adjusting device in the brake application process, so that, when the switching clutch (43, 143) is enabled after overcoming the clearance stroke, the stored energy in the adjusting device can be released and increase the adjusting speed if the clearance has an increased value.

20. Disc brake according to any of the preceding claims, **characterised in that** the application device comprises at least one rolling body application unit (15a, b), which has at least one application piston (21a, b) movable at right angles to the brake disc, and which is designed to overcome the working stroke and/or to apply the application-side application piston with the brake pad to the brake disc (35) in braking operations following a pivoting of a rotary lever located in the brake calliper, and which has at least one drive plate (13) rotatable about an axis oriented parallel to the application device (X).

21. Disc brake according to claim 20, **characterised in that** a drive connection is formed between the rotary lever (5, 6) and the at least one rolling body application unit.

22. Disc brake according to claim 20 or 21, **characterised in that** the adjusting device (39) is driven by at least one drive plate (13a, b) of the rolling body application unit.

23. Disc brake according to any of the preceding claims 1 to 19, **characterised in that** the application device further comprises the following:
a) a rotary lever (117), here provided with one or more eccentric sections (112a, b);
b) a crossbar (112) on which the rotary lever (117) acts, preferably via at least one intermediate element;
c) at least two application plungers (118a, b) located or formed on the crossbar (117);
d) a gear assembly (131) for transmitting the rotary movements of the adjusting device (110) to gear elements of the application plungers (118) and/or for synchronising the rotary movements of elements of the application plungers (118).

## Revendications

1. Frein à disque, comprenant un étrier (3) de frein, qui enjambe une partie de bord d'un disque (35) de frein,
a) comprenant un dispositif (1) de serrage, qui est monté dans l'étrier de frein et qui est au moins conçu pour appliquer une garniture de frein, du côté du serrage, au disque (35) de frein,
b) dans lequel le dispositif de serrage a un système de rattrapage pour régler un jeu de garniture, qui a un dispositif (39, 110) de rattrapage et au moins un ou plusieurs entraînements filetés composés d'une broche (25, 120) filetée et d'une douille (26, 119) filetée pouvant tourner par rapport à elle ou d'un autre élément, comme une traverse, ayant un taraudage,
c) dans lequel le au moins un entraînement fileté peut, lorsque le frein à disque est serré, être déplacé axialement dans la direction du disque (35) de frein, et dans lequel la longueur axiale de l'entraînement fileté peut être modifiée, au moyen du dispositif (39) de rattrapage, par rotation relative des éléments de l'entraînement (20) fileté,
d) dans lequel il est prévu, sous la forme d'embrayages (43, 143) au moins un dispositif sécurisant le jeu de garniture et ayant un ou plusieurs accouplements, qui dépendent du trajet et qui sont accouplés directement ou indirectement avec le au moins un entraînement fileté ou avec un autre élément tournant du système de rattrapage,
**caractérisé**
e) **en ce que** le ou les embrayages est/ou sont fermés lorsque le frein est à l'état desserré, de manière à empêcher les rotations relatives entre le ou les éléments de l'entraînement fileté ou des entraînements filetés et de manière à, lorsque le frein est à l'état serré et après avoir surmonté une course minimum, libérer un mouvement de rattrapage de l'entraînement fileté.

2. Frein à disque suivant la revendication 1, **caractérisé en ce que** le frein à disque est un frein à disque à actionnement pneumatique ou électromotorisé.

3. Frein à disque suivant la revendication 1 ou 2, **caractérisé en ce que** l'accouplement, sous la forme d'un embrayage (43, 143), ayant plusieurs éléments constitutifs, est rassemblé en construction en un module (44, 144) de sécurisation du jeu de garniture.

4. Frein à disque suivant la revendication 1, 2 ou 3, **caractérisé en ce que** le au moins un dispositif (44, 144) de sécurisation du jeu de garniture est disposé radialement à côté de l'entraînement fileté associé.

5. Frein à disque suivant l'une des revendications précédentes, **caractérisé en ce que** le au moins un dispositif (44, 144) de sécurisation du jeu de garniture engrène, par un engrenage avec un engrenage correspondant, avec la douille filetée ou la broche filetée.

6. Frein à disque suivant l'une des revendications précédentes, **caractérisé en ce que** le au moins un dispositif (44, 144) de sécurisation du jeu de garniture est disposé dans le prolongement axial de l'entraînement fileté associé.

7. Frein à disque suivant l'une des revendications précédentes, **caractérisé en ce que** le au moins un dispositif (44, 144) de sécurisation du jeu de garniture est du côté, éloigné du disque de frein, de l'entraînement fileté, disposé dans le prolongement axial de l'entraînement fileté associé.

8. Frein à disque suivant l'une des revendications précédentes, **caractérisé en ce qu'**un module de sécurisation du jeu de garniture propre est associé à chaque entraînement fileté.

9. Frein à disque suivant l'une des revendications précédentes, **caractérisé en ce que** le au moins un embrayage (43, 143) est constitué sous la forme d'un embrayage à friction.

10. Frein à disque suivant la revendication 9, **caractérisé en ce que** le au moins un embrayage (43, 143) est constitué sous la forme d'un embrayage à cône ou d'un embrayage à disque.

11. Frein à disque suivant l'une des revendications précédentes, **caractérisé en ce que** le au moins un embrayage est constitué sous la forme d'un embrayage à complémentarité de forme.

12. Frein à disque suivant la revendication 11, **caractérisé en ce que** le au moins un embrayage est constitué sous la forme d'un embrayage à dents.

13. Frein à disque suivant l'une des revendications précédentes, **caractérisé en ce que** chaque embrayage a en outre une butée pour faire sortir l'embrayage de sa position fermée par un élément du dispositif de serrage.

14. Frein à disque suivant l'une des revendications précédentes, **caractérisé en ce que** chaque embrayage a en outre un ressort (45) de rappel, qui pousse l'embrayage dans la position fermée.

15. Frein à disque suivant l'une des revendications précédentes, **caractérisé en ce qu'**à chaque embrayage est associé un dispositif de réglage d'un jeu de réaction lors de l'actionnement du dispositif de serrage.

16. Frein à disque suivant l'une des revendications précédentes, **caractérisé en ce que** le dispositif a, pour régler le jeu, une vis d'ajustage ou un écrou d'ajustage ou une rondelle d'ajustage.

17. Frein à disque suivant l'une des revendications précédentes, **caractérisé en ce que** le ou les modules de sécurisation du jeu de garniture sont accouplés à l'entraînement fileté au moyen d'une liaison à engrenage.

18. Frein à disque suivant la revendication 17, **caractérisé en ce que** le ou les modules de sécurisation du jeu de garniture engrènent avec l'entraînement fileté par une ou plusieurs roues dentées et/ou roues coniques et/ou un engrenage à moyen de traction et/ou un autre embrayage.

19. Frein à disque suivant l'une des revendications précédentes, **caractérisé en ce que** le mouvement d'entraînement du dispositif de rattrapage est, lors du serrage, emmagasiné d'abord dans un accouplement à ressort accumulateur du dispositif de serrage, de sorte qu'ensuite, lorsque après avoir surmonté la course du jeu de garniture l'embrayage (43, 143) est libéré, l'énergie emmagasinée dans le dispositif de rattrapage peut être libérée et la vitesse de rattrapage peut être augmentée si le jeu de garniture a une valeur agrandie.

20. Frein à disque suivant l'une des revendications précédentes, **caractérisé en ce que** le dispositif de serrage a au moins une unité (15a, b) de serrage à corps de roulement, qui a au moins un piston (21a, b) de serrage mobile perpendiculairement au disque de frein et qui est conçue pour, lors de freinage, surmonter la course de travail ou pour appliquer le piston de serrage du côté du serrage, ayant la garniture de frein au disque (35) de frein, en raison d'un pivotement du levier tournant monté dans l'étrier de frein, et qui a au moins un disque (13) d'entraînement autour d'un axe dirigé parallèlement à la direction (X) de serrage.

21. Frein à disque suivant la revendication 20, **caractérisé en ce qu'**un dispositif d'entraînement est constitué entre le levier (5, 6) tournant et la au moins une unité de serrage à corps de roulement.

22. Frein à disque suivant la revendication 20 ou 21, **caractérisé en ce que** le dispositif (39) de rattrapage est entraîné par au moins un disque (13a, b) d'entraînement de l'unité à corps de roulement.

23. Frein à disque suivant l'une des revendications 1 à 19, **caractérisé en ce que** le dispositif de serrage a en outre ce qui suit :
a) un levier (117) tournant pourvu, dans ce cas, d'un ou plusieurs tronçons (112a, b) d'excentrique;
b) une traverse (112) sur laquelle le levier (117) tournant agit de préférence par le biais d'au moins un élément intermédiaire et
c) au moins deux pistons (118a, b) de serrage, disposés et constitués sur la traverse (117);
d) un agencement (131) d'engrenage pour la transmission des mouvements de rotation du dispositif (110) de rattrapage à des éléments d'engrenage des pistons (118) de serrage et/ou pour la synchronisation des mouvements de rotation d'éléments des pistons (118) de serrage.
